(19) Europäisches Patentamt / European Patent Office / Office européen des brevets

(11) **EP 3 630 655 B1**

(12) **EUROPÄISCHE PATENTSCHRIFT**

(45) Veröffentlichungstag und Bekanntmachung des Hinweises auf die Patenterteilung:
**05.10.2022  Patentblatt 2022/40**

(21) Anmeldenummer: **18740083.3**

(22) Anmeldetag: **29.05.2018**

(51) Internationale Patentklassifikation (IPC):
***B65G 1/137*** (2006.01)

(52) Gemeinsame Patentklassifikation (CPC):
**B65G 1/1378;** B65G 2209/10

(86) Internationale Anmeldenummer:
**PCT/AT2018/060109**

(87) Internationale Veröffentlichungsnummer:
**WO 2018/218266 (06.12.2018 Gazette 2018/49)**

(54) **VERFAHREN UND WARENLAGERSYSTEM ZUM KOMMISSIONIEREN VON WAREN MIT EFFIZIENT BETRIEBENEM DYNAMISCHEN PUFFER**

METHOD AND GOODS STORAGE SYSTEM FOR PICKING GOODS WITH EFFICIENTLY OPERATED DYNAMIC BUFFER

PROCÉDÉ ET SYSTÈME D'ENTREPÔT POUR LA PRÉPARATION DE MARCHANDISES AVEC TAMPON DYNAMIQUE EXPLOITÉ EFFICACEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2017  AT 504632017**

(43) Veröffentlichungstag der Anmeldung:
**08.04.2020  Patentblatt 2020/15**

(73) Patentinhaber: **TGW Logistics Group GmbH 4614 Marchtrenk (AT)**

(72) Erfinder:
• **LINDLEY, Timothy 58239 Schwerte (DE)**

• **SCHRÖPF, Harald Johannes 4600 Wels (AT)**

(74) Vertreter: **Burger, Hannes Anwälte Burger & Partner Rechtsanwalt GmbH Rosenauerweg 16 4580 Windischgarsten (AT)**

(56) Entgegenhaltungen:
**EP-A1- 2 581 329          DE-A1-102013 015 456 DE-B3-102011 104 511**

EP 3 630 655 B1

**Beschreibung**

Die Erfindung betrifft ein Verfahren zum Kommissionieren von Auftrags-Waren, welche einem Auftrag von mehreren Aufträgen zugeordnet sind, wobei der Auftrag mehrere Versandbehälter umfasst. Bei dem Verfahren wird der genannte Auftrag erfasst, und es werden dem Auftrag zugeordnete Auftrags-Waren aus einem Lager ausgelagert. In Folge werden die Auftrags-Waren in einen dynamischen Puffer antransportiert, welcher eine Zuförderstrecke und eine Abförderstrecke, mehrere zwischen der Zuförderstrecke und der Abförderstrecke angeordnete Pufferbahnen sowie zumindest eine zwischen der Abförderstrecke und der Zuförderstrecke angeordnete Rückführbahn aufweist, und die Auftrags-Waren werden in wenigstens einer Pufferbahn des dynamischen Puffers zwischengespeichert. In einem weiteren Schritt erfolgt der Abtransport der Auftrags-Waren aus dem dynamischen Puffer über dessen Abförderstrecke, das Transportieren der Auftrags-Waren zu einem Kommissionierarbeitsplatz und das Befüllen eines am Kommissionierarbeitsplatz bereitgestellten Versandbehälters mit Auftrags-Waren. Ein solches Verfahren ist aus der EP 2 581 329 B1 bekannt.

Weiterhin betrifft die Erfindung ein Warenlagersystem zum Kommissionieren von Auftrags-Waren, welche zumindest einem mehrere Versandbehälter umfassenden Auftrag zugeordnet sind, aufweisend ein Lager, in dem die Auftrags-Waren lagerbar sind, einen dynamischen Puffer, welcher eine Zuförderstrecke und eine Abförderstrecke, mehrere zwischen der Zuförderstrecke und der Abförderstrecke angeordnete Pufferbahnen sowie zumindest eine zwischen der Abförderstrecke und der Zuförderstrecke angeordnete Rückführbahn aufweist, sowie einen Kommissionierarbeitsplatz zum Befüllen eines am Kommissionierarbeitsplatz bereitgestellten Versandbehälters mit Auftrags-Waren. Weiterhin umfasst das Warenlagersystem eine Fördereinrichtung, welche für den Transport von Auftrags-Waren zum dynamischen Puffer hin und vom dynamischen Puffer zum Kommissionierarbeitsplatz eingerichtet ist, und einen Auftrags-Rechner, welcher zur Erfassung eines Auftrags ausgebildet ist. Ein solches Warenlagersystem ist aus der EP 2 581 329 B1 bekannt.

Die EP 2 581 329 B1 offenbart in diesem Zusammenhang ein System zum Kommissionieren von Aufträgen mit mindestens einer einem Auftrag zugeteilten Ware und/oder zum Retourenmanagement. Das System umfasst eine Hängebahnanlage mit Trolleys, Aufgabeplätze, einen Batchpuffer sowie mehrere Förderstrecken und Packplätze. Gemäß dem vorgeschlagenen Verfahren werden alle Trolleys mit den Waren eines Auftrages aus dem Batchpuffer ausgelagert und einem Packplatz zugeführt, sobald alle Waren des Auftrages in dem Batchpuffer vollständig gespeichert sind beziehungsweise der Auftrag qualifiziert zum Abrufen ist.

Diese Vorgangsweise ist mit einer Reihe an Nachteilen verbunden.

Bei dem in der EP 2 581 329 B1 vorgeschlagenen Verfahren muss ein kompletter Auftrag im Batchpuffer zwischengespeichert werden können. Alleine aus diesem Grund muss der Batchpuffer vergleichsweise groß ausgeführt werden. Auch die übrigen Einrichtungen im Warenlagersystem der EP 2 581 329 B1, wie zum Beispiel Sortiereinrichtungen, müssen relativ groß ausgeführt werden, da sie für die Bearbeitung des Förderstroms die Gesamtzahl an Waren eines Auftrags aufnehmen müssen. Zudem ist die Verweildauer der Waren eines Auftrags im Batchpuffer vergleichsweise lang, wodurch auch der Kommissioniervorgang viel Zeit in Anspruch nimmt.

In der Regel ist es auch ein Ziel, einen kompletten Auftrag nach Möglichkeit in einer einzigen Pufferbahn des Batchpuffers zwischenzuspeichern. Dies führt dazu, dass die Batchpuffer nach dem Stand der Technik in der Regel sehr lange Pufferbahnen umfassen, wodurch die bekannten Batchpuffer ein eher ungünstiges Längen-/Breiten-Verhältnis beziehungsweise ein eher ungünstiges Längen-/Höhen-Verhältnis aufweisen. Diese Anforderung an den Batchpuffer kann nur mit einer geringen Anzahl an möglichen Ausführungsformen erreicht werden. Das heißt, der Konstrukteur eines Warenlagersystems hat hinsichtlich des Batchpuffers keine große Gestaltungsfreiheit. Dies führt dazu, dass die bekannten Batchpuffer vergleichsweise schlecht in den Aufbau eines Warenlagersystems integriert werden können.

Zudem ist die Wahrscheinlichkeit, dass ein kompletter Auftrag nur eine einzige Pufferbahn belegt, ohne weiteres Zutun (also ohne geordnete Auslagerung oder entsprechende Bearbeitung des Förderstroms vor dem Batchpuffer) sehr gering. Das im Batchpuffer ablaufende Verfahren und der Abtransport der Waren aus dem Batchpuffer sind daher vergleichsweise kompliziert beziehungsweise mit hohem Bearbeitungsaufwand verbunden.

Ohne weitere Maßnahmen entstehen auch kaum kontinuierliche Förderströme innerhalb des Warenlagersystems, und die Förderströme weisen auch eine nur geringe Effizienz auf, das heißt einen nur geringen Ordnungsgrad beziehungsweise einen nur geringen Grad an Sortierung innerhalb des Stroms.

Die im Stand der Technik gebräuchlichen, langen Pufferbahnen weisen zudem eine schlechte Energieeffizienz auf, da die Wahrscheinlichkeit für die Bewegung von Waren, die nicht nur einem Auftrag angehören gering ist und damit der Anteil an Energie, die für die an sich unnötige Bewegung nicht zu einem Auftrag gehörender Waren groß ist.

Aus den genannten Gründen kann das aus dem Stand der Technik bekannte Warenlagersystem und insbesondere dessen Batchpuffer nicht effizient betrieben werden.

Eine Aufgabe der Erfindung ist es daher, ein verbessertes Verfahren und ein verbessertes Warenlagersystem zum Kommissionieren von Auftrags-Waren anzugeben. Insbesondere sollen die oben genannten Nachteile überwunden werden.

Die Aufgabe der Erfindung wird mit einem Verfahren der eingangs genannten Art gelöst, bei dem

- geprüft wird, ob ein Teil der im dynamischen Puffer vorrätigen Auftrags-Waren für die Befüllung einer vorgebbaren Anzahl von Versandbehältern ausreicht und daher verpackungsfertig ist, und
- der verpackungsfertige Teil der Auftrags-Waren aus dem dynamischen Puffer abtransportiert, zum Kommissionierarbeitsplatz hin transportiert und dort in die vorgegebene Anzahl von Versandbehältern transferiert wird, wobei
- die vorgegebene Anzahl an Versandbehältern kleiner ist als die zur Erfüllung des Auftrags notwendige Gesamtanzahl an Versandbehältern.

"Verpackungsfertig" sind Auftrags-Waren also dann, wenn sie obige Bedingung erfüllen, das heißt für die Befüllung einer vorgebbaren Anzahl von Versandbehältern ausreichen. Die Prüfung auf verpackungsfertige Waren wird von einem Puffer-Steuerrechner, insbesondere durch ein darin ablaufendes Programm, durchgeführt.

Die Aufgabe der Erfindung wird auch mit einem Warenlagersystem der eingangs genannten Art gelöst, zusätzlich umfassend

- einen Puffer-Steuerrechner, welcher für die Überprüfung ausgebildet ist, ob ein Teil der im dynamischen Puffer vorrätigen Auftrags-Waren, welche dem Auftrag zugeordnet sind, für die Befüllung einer vorgebbaren Anzahl von Versandbehältern ausreicht und daher verpackungsfertig ist, und
- welcher weiter dazu ausgebildet ist, den Abtransport dieses verpackungsfertigen Teils an Auftrags-Waren aus dem dynamischen Puffer und den Transport zum Kommissionierarbeitsplatz hin auszulösen, wobei
- die vorgegebene Anzahl von Versandbehältern kleiner ist als die zur Erfüllung des Auftrags notwendige Gesamtanzahl an Versandbehältern.

Insbesondere verbindet die Fördereinrichtung den dynamischen Puffer mit dem Lager und dem Kommissionierarbeitsplatz. Das heißt, die Fördereinrichtung ist für den Transport von Auftrags-Waren vom Lager zum dynamischen Puffer und vom dynamischen Puffer zum Kommissionierarbeitsplatz eingerichtet. Im Verlauf der Fördereinrichtung können noch weitere Einrichtungen des Warenlagersystems vorgesehen sein, zum Beispiel Umpackstationen zum Umpacken der vom Lager kommenden Auftrags-Waren auf Ladehilfsmittel und/oder ein Sortierer.

Durch die gegenüber dem Stand der Technik deutlich verringerte Anzahl an Auftrags-Waren, die zur Bildung eines verpackungsfertigen Teils benötigt werden (das heißt "qualifizierende Auftrags-Waren"), kann der dynamische Puffer besonders effizient betrieben werden. Zum einen ist die Wahrscheinlichkeit hoch, dass ein verpackungsfertiger Teil nur eine einzige Pufferbahn belegt, wodurch der Abtransport der Auftrags-Waren aus dem dynamischen Puffer wesentlich vereinfacht wird. Daher entstehen gewünschte, weitgehend kontinuierliche Förderströme innerhalb des Warenlagersystems. Diese Förderströme weisen auch eine bessere Effizienz auf, das heißt einen hohen Ordnungsgrad beziehungsweise einen hohen Grad an Sortierung innerhalb des Stroms. Kurze Pufferbahnen weisen zudem eine bessere Energieeffizienz auf, da die Wahrscheinlichkeit für die Bewegung von Auftrags-Waren, die nicht einem verpackungsfertigen Teil angehören (das heißt "nicht-qualifizierende Auftrags-Waren"), sinkt und damit auch der Anteil an Energie, die für die an sich unnötige Bewegung nicht-qualifizierender Auftrags-Waren benötigt wird.

Die relativ geringe Größe eines verpackungsfertigen Teils an Auftrags-Waren sorgt auch dafür, dass die Verweildauer der Auftrags-Waren im dynamischen Puffer nur sehr kurz ist. Daher sind nur vergleichsweise kleine dynamische Puffer für den Betrieb des Warenlagersystems nötig. Auch mit dem dynamischen Puffer verbundene Sortiereinrichtungen (zum Beispiel ein mit dem dynamischen Puffer verbundener Vorsortier-Puffer oder eine dem dynamischen Puffer nachgelagerte Sortierstufe) können vergleichsweise klein gehalten werden. Dies führt dazu, dass die dynamischen Puffer sowie optional vorhandene Sortiereinrichtungen vergleichsweise gut in den Aufbau eines Warenlagersystems integriert werden können.

Schließlich kann der dynamische Puffer auch in einem günstigen Längen-/Breiten-Verhältnis beziehungsweise in einem günstigen Längen-/Höhen-Verhältnis aufgebaut werden, da das Ziel, einen verpackungsfertigen Teil nach Möglichkeit in einer einzigen Pufferbahn zwischenzuspeichern, mit einer Vielzahl an möglichen Ausführungsformen eines dynamischen Puffers erreicht werden kann. Das heißt, der Konstrukteur eines Warenlagersystems hat hinsichtlich des dynamischen Puffers große Gestaltungsfreiheit. Dies führt ebenfalls dazu, dass die dynamischen Puffer vergleichsweise gut in den Aufbau von Warenlagersystemen integriert werden können.

Im Gegensatz dazu stehen die Batchpuffer aus dem Stand der Technik, die wegen des Ziels, einen kompletten Auftrag nach Möglichkeit in einer einzigen Pufferbahn zwischenzuspeichern, in der Regel sehr lange Pufferbahnen und damit ein eher ungünstiges Längen-/Breiten-Verhältnis beziehungsweise ein eher ungünstiges Längen-/Höhen-Verhältnis aufweisen. Dies führt dazu, dass die dynamischen Puffer vergleichsweise schlecht in den Aufbau eines Warenlagersystems integriert werden können.

Ein Kennzeichnen eines "dynamischen Puffers" ist die zwischen der Abförderstrecke und der Zuförderstrecke angeordnete Rückführbahn. Im Gegensatz dazu stehen "statische Puffer", die keine zwischen der Abförderstrecke und der Zuförderstrecke angeordnete Rückführbahn aufweisen, sondern nur mehrere zwischen der Zuförderstrecke und der Abförderstrecke angeordnete Pufferbahnen.

An dieser Stelle sei auch erwähnt, dass das Warenlagersystem natürlich mehrere Aufträge gleichzeitig bearbeiten kann. Das heißt es können Auftrags-Waren mehrerer Aufträge gleichzeitig kommissioniert werden. Günstig ist es daher, wenn weitere Waren, die sich in der Pufferbahn, in welcher der verpackungsfertige Teil der Auftrags-Waren zwischengespeichert ist, zwischen den Auftrags-Waren des verpackungsfertigen Teils befinden, beim Abtransport des verpackungsfertigen Teils aus dem dynamischen Puffer über die Rückführbahn in den dynamischen Puffer rückgeführt werden.

Mit anderen Worten befinden sich in der Pufferbahn, in welcher der verpackungsfertige Teil der Auftrags-Waren zwischengespeichert ist, weitere Waren zwischen den Auftrags-Waren des verpackungsfertigen Teils, und diese weiteren Waren werden beim Abtransport des verpackungsfertigen Teils aus dem dynamischen Puffer über die Rückführbahn in den dynamischen Puffer rückgeführt. Dadurch wird der Ordnungsgrad der im dynamischen Puffer befindlichen Auftrags-Waren erhöht.

Verpackungsfertige Auftrags-Waren (d.h. Auftrags-Waren, die dem verpackungsfertigen Teil angehören) werden, wie erwähnt, als "qualifizierende Auftrags-Waren" bezeichnet. Noch nicht verpackungsfertige Auftrags-Waren werden dagegen auch als "nicht-qualifizierende Auftrags-Waren" bezeichnet.

Das Lager kann automatisiert betrieben werden. In diesem Fall ist im Bereich des Lagers ein Waren-Manipulator vorgesehen, welcher zum Auslagern von Auftrags-Waren aus dem Lager ausgebildet ist. Der Waren-Manipulator kann insbesondere als Einebenen-Regalbediengerät oder Mehrebenen-Regalbediengerät ausgebildet sein. Grundsätzlich können die Auftrags-Waren auch manuell ausgelagert werden, beispielsweise direkt per Hand oder mit Hilfe eines manuell bedienten Gabelstaplers. Ein Waren-Manipulator kann dann entfallen. Das Lager kann allgemein als Vorratslager und/oder als Retourenwarenlager ausgebildet sein.

Weiterhin wird angemerkt, dass in der Regel zwar mehrere Auftrags-Waren in einem Versandbehälter aufgenommen werden, grundsätzlich kann aber auch nur eine (einzige) Auftrags-Ware von einem Versandbehälter aufgenommen sein. Auch kann an einem Kommissionierarbeitsplatz ein Versandbehälter bereitgestellt sein, es können aber auch mehrere Versandbehälter pro Kommissionierarbeitsplatz bereitgestellt werden.

Weitere vorteilhafte Ausgestaltungen und Weiterbildungen der Erfindung ergeben sich nun aus den Unteransprüchen sowie aus der Beschreibung in Zusammenschau mit den Figuren.

Vorteilhaft ist es, wenn die vorgegebene Anzahl an Versandbehältern zur Bildung eines verpackungsfertigen Teils an Auftrags-Waren genau Eins ist. Auf diese Weise wird der dynamische Puffer rasch wieder geleert.

Vorteilhaft ist es aber auch, wenn die vorgegebene Anzahl an Versandbehältern zur Bildung eines verpackungsfertigen Teils an Auftrags-Waren größer als Eins ist. Dadurch wird eine höhere Anzahl an Auftrags-Waren auf einmal aus dem dynamischen Puffer ausgelagert, wodurch die nachfolgende Behandlung des Förderstroms unter Umständen vereinfacht ist. Besonders vorteilhaft ist diese Vorgangsweise im Zusammenhang mit einer dem dynamischen Puffer nachgeschalteten Sortierstufe, welche durch die vorgeschlagene Vorgangsweise optimal betrieben werden kann.

Günstig ist es weiterhin, wenn die Auftrags-Waren nach dem Auslagern aus dem Lager und vor dem Antransport zu dem dynamischen Puffer in Ladehilfsmittel umgepackt werden. Dadurch können nicht oder schwer transportierbare Waren transportfähig gemacht werden. Die Verwendung von Ladehilfsmitteln ermöglicht darüber hinaus einen wenig störanfälligen Betrieb des Warenlagersystems. Die Waren können natürlich auch im Lager in Ladehilfsmitteln gelagert werden, entweder in denselben Ladehilfsmitteln, die im dynamischen Puffer verwendet werden oder in anderen Ladehilfsmitteln (insbesondere in Kartons). Als Ladehilfsmittel kommen insbesondere Hängetaschen, Behälter (insbesondere Kisten oder Boxen) oder Tablare in Betracht. Eine Hängetasche ist beispielsweise aus der EP 3 090 967 A2 bekannt. Eine Hängetasche ist generell sehr platzsparend und bietet guten Schutz für die darin befindliche Ware.

Vorteilhaft ist es auch, wenn

- die Auftrags-Waren im dynamischen Puffer in Ladehilfsmitteln zwischengespeichert werden und
- in einem Ladehilfsmittel genau eine Auftrags-Ware enthalten ist.

Dadurch können die Auftrags-Waren auf besonders flexible Weise kommissioniert werden.

Vorteilhaft ist es darüber hinaus, wenn

- die Auftrags-Waren im dynamischen Puffer in Ladehilfsmitteln zwischengespeichert werden und
- in einem Ladehilfsmittel mehr als eine Auftrags-Ware enthalten ist.

Auf diese Weise kann der dynamische Puffer noch kleiner gestaltet werden, da die Auftrags-Waren darin in höherer Dichte zwischengespeichert werden.

Von Vorteil ist es weiterhin, wenn

- die Auftrags-Waren anhand ihrer Eigenschaften zumindest einer Waren-Gruppe zugeordnet werden und

- ein Versandbehälter nur mit Auftrags-Waren einer einzigen Waren-Gruppe befüllt wird.

Dadurch wird die Handhabung und im Speziellen ein Einlagern der Auftrags-Waren an einem Zielort, den die Versandbehälter nach dem Versand erreichen, vereinfacht. Der Zielort kann beispielsweise ein Geschäftslokal sein, in dem die Waren an Endkunden angeboten werden. Die Versandbehälter können nun so befüllt sein, dass sie bestimmten Stockwerken und/oder Abteilungen dieses Geschäftslokals zuordenbar sind, wodurch zum Beispiel ein Einsortieren der zum Verkauf angebotenen Waren vereinfacht wird.

Vorteilhaft ist es aber auch, wenn

- die Auftrags-Waren anhand ihrer Eigenschaften zumindest einer Waren-Gruppe zugeordnet werden und
- ein Versandbehälter mit Auftrags-Waren mehrerer Waren-Gruppen befüllt wird. Dadurch können die Versandbehälter auch dann vollständig aufgefüllt werden, wenn die Anzahl an Auftrags-Waren einer Waren-Gruppe dazu nicht ausreichen würde.

In einer weiteren günstigen Ausführungsvariante umfassen die Auftrags-Waren Kleidungsstücke, und die Eigenschaften zur Bildung einer Waren-Gruppe betreffen eine Farbe des Kleidungsstücks und/oder eine Art des Kleidungsstücks und/oder eine Größe des Kleidungsstücks. Eine Art des Kleidungstückes kann beispielsweise die Unterscheidung nach Farbe, die Unterscheidung Shirt/Bluse/Hemd, gemustert/unicolor, Damen/Herren/unisex, etc. betreffen. Selbstverständlich sind auch Kombinationen der genannten Eigenschaften möglich.

Günstig ist es, wenn die Zuordnung einer Auftrags-Ware zu einem Versandbehälter vor dem Zwischenspeichern der Auftrags-Ware im dynamischen Puffer erfolgt. Dadurch läuft der Kommissioniervorgang vergleichsweise deterministisch ab. Beispielsweise kann eine Zuordnung einer Auftrags-Ware zu einem bestimmten Versandbehälter schon beim Auslagern (oder auch davor) erfolgen. Der Kommissioniervorgang ist daher gut planbar.

Günstig ist es aber auch, wenn die Zuordnung einer Auftrags-Ware zu einem Versandbehälter vor dem Abtransport der Auftrags-Waren aus dem dynamischen Puffer erfolgt. Dadurch erfolgt der dem dynamischen Puffer nachgelagerte Teil des Kommissionierverfahrens und zumindest teilweise auch der im dynamischen Puffer ablaufende Teil des Kommissionierverfahrens auf relativ deterministische Weise. Diese Teile des Kommissioniervorgangs sind daher gut planbar. Insbesondere erfolgt die Zuordnung einer Auftrags-Ware zu einem Versandbehälter während der Zwischenspeicherung der Auftrags-Ware im dynamischen Puffer.

Schließlich ist es auch günstig, wenn die Zuordnung einer Auftrags-Ware zu einem Versandbehälter nach dem Abtransport der Auftrags-Waren aus dem dynamischen Puffer erfolgt. Der Kommissioniervorgang ist daher besonders flexibel, da die Zuordnung einer Auftrags-Ware zu einem bestimmten Versandbehälter vergleichsweise spät erfolgt und daher auch noch vergleichsweise spät korrigierend in den Kommissioniervorgang eingegriffen werden kann.

Vorteilhaft ist es weiterhin, wenn zwischen dem dynamischen Puffer und dem Kommissionierarbeitsplatz eine Sortierstufe vorgesehen ist, die dazu eingerichtet ist, eine am Kommissionierarbeitsplatz gewünschte Reihenfolge der Auftrags-Waren herzustellen. Dementsprechend ist auch ein Verfahren von Vorteil, bei dem

- die dem Auftrag zugeordneten Auftrags-Waren unsortiert zu dem dynamischen Puffer antransportiert und in der wenigstens einen Pufferbahn des dynamischen Puffers zwischengespeichert werden und
- die Auftrags-Waren nach dem Abtransport aus dem dynamischen Puffer und vor dem Eintreffen am Kommissionierarbeitsplatz eine Sortierstufe durchlaufen (insbesondere einen Matrix-Sortierer), in dem eine am Kommissionierarbeitsplatz gewünschte Reihenfolge der Auftrags-Waren hergestellt wird.

Das heißt, beim Antransport zu dem dynamischen Puffer weisen die dem Auftrag zugeordneten Auftrags-Waren noch nicht die am Kommissionierarbeitsplatz gewünschte Reihenfolge auf. Dadurch kann der Antransport der Auftrags-Waren zu dem dynamischen Puffer und insbesondere das Auslagern der Auftrags-Waren aus dem Lager beziehungsweise auch ein Umlagern der Auftrags-Waren in ein Ladehilfsmittel vergleichsweise flexibel erfolgen, da dabei keine bestimmte Reihenfolge eingehalten werden muss. Diese wird erst in einer dem dynamischen Puffer nachfolgenden Sortierstufe hergestellt. Insbesondere arbeitet die Sortierstufe auf Basis eines Radix-Algorithmus. Solche Sortierstufen sind auch unter dem Begriff "Matrix-Sortierer" bekannt. Im Speziellen weist ein solcher Matrix-Sortierer drei Stufen mit jeweils sechs Bahnen auf.

Grundsätzlich wäre es aber auch denkbar, dass die dem Auftrag zugeordneten Auftrags-Waren (in Bezug auf den Auftrag) sortiert zu dem dynamischen Puffer antransportiert und in der wenigstens einen Pufferbahn des dynamischen Puffers zwischengespeichert werden. Das heißt, Auftrags-Waren eines Auftrags werden dann in einer am Kommissionierarbeitsplatz gewünschten Reihenfolge zu dem dynamischen Puffer antransportiert und in der wenigstens einen Pufferbahn des dynamischen Puffers zwischengespeichert. Das Durchlaufen einer dem dynamischen Puffer nachgeschalteten Sortierstufe kann dann entfallen.

In einer weiteren vorteilhaften Ausgestaltung umfasst das Warenlagersystem einen mit dem dynamischen Puffer verbundenen Vorsortier-Puffer, welcher mehrere Rückführbahnen aufweist, und der dazu eingerichtet ist, Auftrags-Waren mehrerer Aufträge/Versandbehälter/Waren-Gruppen auf Basis der Aufträge/Versandbehälter/Waren-Gruppen zu gruppieren. Insbesondere ist dabei auch ein Verfahren von Vorteil, bei dem

a) je eine Auftrags-Ware je einem Auftrag zugeordnet ist, wobei

- die Auftrags-Waren mehrerer Aufträge untereinander vermischt zu dem dynamischen Puffer antransportiert und in der wenigstens einen Pufferbahn des dynamischen Puffers zwischengespeichert werden und
- die Auftrags-Waren mehrerer Aufträge vom dynamischen Puffer in einen mit dem dynamischen Puffer verbundenen Vorsortier-Puffer transportiert und dort auf Basis der Aufträge gruppiert werden oder

b) je eine Auftrags-Ware je einem Versandbehälter zugeordnet ist, wobei

- die Auftrags-Waren mehrerer Versandbehälter untereinander vermischt zu dem dynamischen Puffer antransportiert und in der wenigstens einen Pufferbahn des dynamischen Puffers zwischengespeichert werden und
- die Auftrags-Waren mehrerer Versandbehälter vom dynamischen Puffer in einen mit dem dynamischen Puffer verbundenen Vorsortier-Puffer transportiert und dort auf Basis der Versandbehälter gruppiert werden oder

c) eine Auftrags-Ware einer Waren-Gruppe zugeordnet ist, wobei

- die Auftrags-Waren mehrerer Waren-Gruppen untereinander vermischt zu dem dynamischen Puffer antransportiert und in der wenigstens einen Pufferbahn des dynamischen Puffers zwischengespeichert werden und
- die Auftrags-Waren mehrerer Waren-Gruppen vom dynamischen Puffer in einen mit dem dynamischen Puffer verbundenen Vorsortier-Puffer transportiert und dort auf Basis der Waren-Gruppen gruppiert werden.

Mit anderen Worten liegt ein Verfahren zum Kommissionieren von Auftrags-Waren vor, bei dem

- mehrere Zuordnungseinheiten gleicher Art vorgesehen sind,
- je eine Auftrags-Ware einer Zuordnungseinheit zugeordnet ist,
- die Auftrags-Waren mehrerer Zuordnungseinheiten untereinander vermischt zu dem dynamischen Puffer antransportiert und in der wenigstens einen Pufferbahn des dynamischen Puffers zwischengespeichert werden und
- die Auftrags-Waren mehrerer Zuordnungseinheiten vom dynamischen Puffer in einen mit dem dynamischen Puffer verbundenen, insbesondere diesem vorgeschalteten, Vorsortier-Puffer transportiert und dort auf Basis der Zuordnungseinheiten gruppiert werden und eine Vermischung der Zuordnungseinheiten aufgelöst wird, wobei

- als Art der Zuordnungseinheiten Aufträge oder Versandbehälter oder Waren-Gruppen und als Zuordnungseinheit ein Auftrag oder ein Versandbehälter oder eine Waren-Gruppe vorgesehen ist.

Das heißt, Auftrags-Waren mehrerer Aufträge/Versandbehälter/Waren-Gruppen werden untereinander vermischt zu dem dynamischen Puffer antransportiert und in der wenigstens einen Pufferbahn des dynamischen Puffers zwischengespeichert. Direkt aufeinanderfolgende Auftrags-Waren an der Zuförderstrecke des dynamischen Puffers bilden also nicht nur Auftrags-Waren eines einzigen Auftrags / eines einzigen Versandbehälters / einer einzigen Waren-Gruppe. Die Gruppierung beziehungsweise die Bildung von "Clustern" auf Basis der Aufträge/Versandbehälter/Waren-Gruppen erfolgt stattdessen später im Vorsortier-Puffer. Diese Bildung von Gruppen oder Clustern ist für den Ablauf des nachfolgenden Teils des Kommissioniervorgangs von Vorteil, insbesondere für das Verpacken der Auftrags-Waren. Da die Auftrags-Waren im Vorsortier-Puffer gruppiert werden, kann dieser auch als "Gruppier-Puffer" gesehen werden. Der Vollständigkeit halber wird auch angemerkt, dass vor der Durchführung eines dem Punkt b) entsprechenden Verfahrens die Zuordnung einer Auftrags-Ware zu je einem Versandbehälter bereits erfolgt ist.

Mit dem vorgeschlagenen Verfahren wird der Ordnungsgrad der im dynamischen Puffer zwischengespeicherten Auftrags-Waren erhöht. Im Optimalfall wird eine Vermischung unterschiedlicher Aufträge/Versandbehälter/Waren-Gruppen völlig aufgehoben. Denkbar ist aber auch, dass Auftrags-Waren unterschiedlicher Aufträge/Versandbehälter/Waren-Gruppen auch nach Durchlaufen des Vorsortier-Puffers geringfügig durchmischt sind. Gegebenenfalls kann der Vorsortier-Puffer auch mehrmals durchlaufen werden, um den Ordnungsgrad im dynamischen Puffer Schritt für Schritt zu erhöhen.

Generell kann der Vorsortier-Puffer als Teil des dynamischen Puffers aufgefasst werden. Der dynamische Puffer hat dann nicht nur eine Rückführbahn, sondern mehrere Rückführbahnen, die wenigstens zum Teil für das Sortieren der Auftrags-Waren genutzt werden.

Grundsätzlich wäre es auch denkbar, dass die Auftrags-Waren in Bezug auf mehrere Aufträge/Versandbehälter/Waren-Gruppen sortiert zu dem dynamischen Puffer antransportiert und in der wenigstens einen Pufferbahn des dynamischen Puffers zwischengespeichert werden. Das heißt, Auftrags-Waren mehrerer Aufträge/Versandbehälter/Waren-Gruppen werden auf Basis der Aufträge/Versandbehälter/Waren-Gruppen gruppiert zu dem dynamischen Puffer antransportiert und in der wenigstens einen Pufferbahn des dynamischen Puffers zwischengespeichert. Konkret ist daher ein Verfahren von Vorteil, bei dem

a) je eine Auftrags-Ware je einem Auftrag zugeordnet ist und die Auftrags-Waren mehrerer Aufträge gruppiert nach Aufträgen zu dem dynamischen Puffer antransportiert und in der wenigstens einen Pufferbahn des dynamischen Puffers zwischengespeichert werden oder

b) je eine Auftrags-Ware je einem Versandbehälter zugeordnet ist und die Auftrags-Waren mehrerer Versandbehälter gruppiert nach Versandbehältern zu dem dynamischen Puffer antransportiert und in der wenigstens einen Pufferbahn des dynamischen Puffers zwischengespeichert werden oder

c) eine Auftrags-Ware einer Waren-Gruppe zugeordnet ist, wobei Auftrags-Waren mehrerer Waren-Gruppen gruppiert nach Waren-Gruppen zu dem dynamischen Puffer antransportiert und in der wenigstens einen Pufferbahn des dynamischen Puffers zwischengespeichert werden.

Das Durchlaufen eines mit dem dynamischen Puffer verbundenen Vorsortier-Puffers kann dann entfallen.

Im Zusammenhang mit der Gruppierung von Auftrags-Waren ist es auch von Vorteil, wenn

i) für Auftrags-Waren eine Kombination der Fälle a) und b) vorliegt und innerhalb der Gruppierung auf Basis der Aufträge eine Gruppierung auf Basis der Versandbehälter erfolgt oder

ii) für Auftrags-Waren eine Kombination der Fälle a) und c) vorliegt und innerhalb der Gruppierung auf Basis der Aufträge eine Gruppierung auf Basis der Waren-Gruppen erfolgt oder

iii) für Auftrags-Waren eine Kombination der Fälle b) und c) vorliegt und innerhalb der Gruppierung auf Basis der Versandbehälter eine Gruppierung auf Basis der Waren-Gruppen erfolgt oder umgekehrt oder

iv) für Auftrags-Waren eine Kombination der Fälle a) und b) und c) vorliegt und innerhalb der Gruppierung auf Basis der Aufträge eine Gruppierung auf Basis der Versandbehälter und innerhalb der Gruppierung auf Basis der Versandbehälter eine Gruppierung auf Basis der Waren-Gruppen erfolgt oder

v) für Auftrags-Waren eine Kombination der Fälle a) und b) und c) vorliegt und innerhalb der Gruppierung auf Basis der Aufträge eine Gruppierung auf Basis der Waren-Gruppen und innerhalb der Gruppierung auf Basis der Waren-Gruppen eine Gruppierung auf Basis der Versandbehälter erfolgt.

Mit anderen Worten liegt ein Verfahren vor, bei dem

- mehrere Arten von Zuordnungseinheiten vorgesehen sind,
- je eine Auftrags-Ware einer Zuordnungseinheit einer Art zugeordnet ist und
- die Gruppierung im Vorsortier-Puffer auf Basis einer Art von Zuordnungseinheiten und innerhalb dieser Gruppierung auf Basis einer anderen Art von Zuordnungseinheiten erfolgt.

Auf diese Weise wird der Ordnungsgrad im Warenstrom der Auftrags-Waren noch weiter erhöht, wodurch der Ablauf des nachfolgenden Teils des Kommissioniervorgangs noch weiter verbessert wird, insbesondere das Verpacken der Auftrags-Waren.

Besonders vorteilhaft ist es auch, wenn eine Wahrscheinlichkeit und/oder eine benötigte Zeit für die Bildung eines verpackungsfertigen Teils für verschiedene Kombinationen an Auftrags-Waren vorausberechnet wird und jene Auftrags-Waren zuerst zu dem dynamischen Puffer antransportiert werden, für welche die Bildung eines verpackungsfertigen Teils am wahrscheinlichsten ist und/oder am wenigsten Zeit benötigt. Dadurch ist die Kommissionierleistung des Warenlagersystems besonders groß. Insbesondere ist die Verweildauer der Auftrags-Waren im dynamischen Puffer auch nur kurz, und dieser kann besonders klein ausgeführt werden.

Besonders vorteilhaft ist es darüber hinaus auch, wenn für die Qualifizierung von Auftrags-Waren als verpackungsfertiger Teil zusätzlich überprüft wird, ob eine oder mehrere der Bedingungen

I) für die Auftrags-Waren des verpackungsfertigten Teils liegt eine höhere zeitliche Priorisierung vor als für andere Auftrags-Waren eines anderen verpackungsfertigen Teils und/oder

II) die Größe des verpackungsfertigen Teils ist größer ist als ein anderer verpackungsfertiger Teil und/oder

III) eine Gruppierung auf Basis eines Auftrags / von Versandbehältern / von Waren-Gruppen ist bereits erfolgt

zutreffend ist.

Es werden also zusätzliche Bedingungen für den Abtransport des verpackungsfertigen Teils der Auftrags-Waren aus dem dynamischen Puffer und für den Transport zum Kommissionierarbeitsplatz hin geprüft. Im Fall I) werden dringende Aufträge bevorzugt abgearbeitet. Im Fall II) wird dafür Sorge getragen, dass der dynamische Puffer möglichst stark entleert wird. Im Fall III) wird schließlich darauf geachtet, dass eine Gruppierung, welche unter Umständen für die nachfolgende Verpackung der Auftrags-Waren erforderlich ist, bereits erfolgt ist und nicht noch hergestellt werden muss, beispielsweise mittels eines Durchlaufs des Vorsortier-Puffers.

Günstig ist es weiterhin, wenn einem dynamischen Puffer genau ein Vorsortier-Puffer zugeordnet ist. Dadurch ist der Verfahrensablauf beim Bilden von Gruppen besonders einfach, und es treten zwischen mehreren dynamischen Puffern keine Blockaden auf.

Günstig ist es aber auch, wenn einem dynamischen Puffer mehrere Vorsortier-Puffer zugeordnet sind. Dadurch steht für den dynamischen Puffer eine besonders hohe Sortierleistung zur Verfügung.

Schließlich ist es auch günstig, wenn ein Vorsortier-Puffer mehreren dynamischen Puffern zugeordnet ist. Dadurch benötigt das Warenlagersystem insgesamt vergleichsweise wenig Platz.

Generell ist es auch besonders vorteilhaft, wenn ein Verhältnis zwischen einer im Warenlagersystem vorgesehenen Gesamtanzahl $n_1$ an Rückführbahnen des zumindest einen Vorsortier-Puffers und einer im Warenlagersystem vorgesehenen Gesamtanzahl $n_2$ an Pufferbahnen des zumindest einen dynamischen Puffers

$$\frac{n_1}{n_2} = \frac{ta \cdot p \cdot m_1 \cdot f \cdot c_2 \cdot x}{c_1 \cdot b}$$

beträgt. Dabei ist

- ta eine von einer Auftrags-Ware vom dynamischen Puffer zum Vorsortier-Puffer durchschnittlich benötigte Transportzeit,
- p eine vom Vorsortierpuffer je Zeiteinheit bereitzustellende Anzahl an Auftrags-Waren,
- $c_1$ eine in einer Rückführbahn des Vorsortier-Puffers speicherbare Anzahl an Auftrags-Waren,
- $m_1$ eine Gesamtzahl der vom Warenlagersystem umfassten Vorsortier-Puffer,
- b eine gleichzeitig im dynamischen Puffer zwischenspeicherbare Anzahl an Auftrags-Waren,
- f ein durchschnittlicher Füllgrad der Pufferbahnen des dynamischen Puffers und
- $c_2$ eine in einer Pufferbahn des dynamischen Puffers speicherbare Anzahl an Auftrags-Waren.
- Für x wird ein Wert von 1,5 gewählt, wenn die letzte einen Ausgang des dynamischen Puffers passierende Auftrags-Ware des Auftrags die Auslagerung weiterer Auftrags-Waren auslöst, und für x wird ein Wert von 2,0 gewählt, wenn die letzte einen Eingang des Vorsortier-Puffers passierende Auftrags-Ware des Auftrags die Auslagerung weiterer Auftrags-Waren auslöst. Ansonsten wird ein dazwischen liegender Wert gewählt.

Der Parameter ta kann auch als Zugriffszeit betrachtet oder bezeichnet werden, p als Prozessleistung, c1 als Bahnkapazität des Vorsortierpuffers, b als Batchgröße, c2 als Bahnkapazität des dynamischen Puffers und x als Sequenzpunkt-Faktor.

Die Batchgröße b ist auch eine Maßzahl für eine Anzahl an Auftrags-Waren der im Warenlagersystem gleichzeitig bearbeiteten Gruppen an Aufträgen. Der durchschnittliche Füllgrad f der Pufferbahnen des dynamischen Puffers gibt jenen Anteil der Pufferbahnen (in Prozent) an, der im zeitlichen Mittel von Auftrags-Waren belegt ist. Der auf 100% fehlende Teil ist demnach im zeitlichen Mittel leer beziehungsweise nicht von Auftrags-Waren belegt.

Der Sequenzpunkt-Faktor x berücksichtigt, wie zeitnah eine erforderliche Nachförderung von Waren aus dem dynamischen Puffer in den Vorsortierpuffer ausgelöst wird beziehungsweise tatsächlich erfolgt, nachdem ein entsprechender Bedarf registriert wurde. Liegt der Sequenzpunkt am Eingang des Vorsortierpuffers dann wird für den Sequenzpunkt-Faktor x der Wert 2,0 gewählt. Liegt der Sequenzpunkt am Ausgang des dynamischen Puffers, dann wird für den Sequenzpunkt-Faktor x der Wert 1,5 gewählt. Liegt der Sequenzpunkt zwischen dem Ausgang des dynamischen Puffers und dem Eingang des Vorsortierpuffers, dann wird für den Sequenzpunkt-Faktor x ein repräsentativer Wert (d.h. ein linear interpolierter Wert) zwischen 1,5 und 2,0 gewählt.

Die Formel für das Verhältnis zwischen der im Warenlagersystem vorgesehenen Gesamtanzahl $n_1$ an Rückführbahnen von Vorsortier-Puffern und der im Warenlagersystem vorgesehenen Gesamtanzahl $n_2$ an Pufferbahnen von dynamischen Puffern kann auch auf die Anzahl an Ladehilfsmitteln anstelle der Anzahl der Auftrags-Waren bezogen werden. In diesem Fall ist in der angegebenen Formel anstelle der Anzahl der Auftrags-Waren die durchschnittliche Füllmenge der Ladehilfsmittel mit Auftrags-Waren einzusetzen. Dabei ist es unerheblich, ob alle Ladehilfsmittel dieselbe Menge an Auftrags-Waren beinhalten, oder ob die Ladehilfsmittel unterschiedliche Mengen an Auftrags-Waren aufnehmen.

Das Verhältnis zwischen einer im Warenlagersystem vorgesehenen Gesamtanzahl $n_1$ an Rückführbahnen des zumindest einen Vorsortier-Puffers und einer im Warenlagersystem vorgesehenen Gesamtanzahl $n_2$ an Pufferbahnen des zumindest einen dynamischen Puffers beträgt dann

$$\frac{n_1}{n_2} = \frac{ta \cdot p \cdot m_1 \cdot f \cdot c_2 \cdot x}{c_1 \cdot b}$$

wobei

- ta eine von einem Ladehilfsmittel vom dynamischen Puffer zum Vorsortier-Puffer durchschnittlich benötigte Transportzeit,
- p eine vom Vorsortierpuffer je Zeiteinheit bereitzustellende Anzahl an Ladehilfsmitteln,
- $c_1$ eine in einer Rückführbahn des Vorsortier-Puffers speicherbare Anzahl an Ladehilfsmitteln,
- $m_1$ eine Gesamtzahl der vom Warenlagersystem umfassten Vorsortier-Puffer,
- b eine gleichzeitig im dynamischen Puffer zwischenspeicherbare Anzahl an Ladehilfsmitteln,
- f ein durchschnittlicher Füllgrad der Pufferbahnen des dynamischen Puffers und
- $c_2$ eine in einer Pufferbahn des dynamischen Puffers speicherbare Anzahl an Ladehilfsmitteln ist.
- Für x wird ein Wert von 1,5 gewählt, wenn das letzte einen Ausgang des dynamischen Puffers passierende Ladehilfsmittel des Auftrags die Auslagerung weiterer Ladehilfsmittel auslöst, und für x wird ein Wert von 2,0 gewählt, wenn das letzte einen Eingang des Vorsortier-Puffers passierende Ladehilfsmittel des Auftrags die Auslagerung weiterer Ladehilfsmittel auslöst. Ansonsten wird ein dazwischen liegender Wert gewählt.

Generell führen die vorgeschlagenen Maßnahmen dazu, dass die Vorsortier-Puffer im Vergleich zu den dynamischen Puffern sehr klein ausfallen. Mit anderen Worten hat der Vorsortier-Puffer an der Gesamt-Lagerkapazität, welche durch die Kombination aus dem dynamischen Puffer und dem zugeordneten Vorsortier-Puffer gebildet ist, nur geringen Anteil. Dadurch ist die Lagerkapazität im Warenlagersystem besonders groß.

Die oben angegebene Formel bezieht sich auf das Verhältnis zwischen der im Warenlagersystem vorgesehenen Gesamtanzahl $n_1$ an Rückführbahnen der Vorsortier-Puffer und der im Warenlagersystem vorgesehenen Gesamtanzahl $n_2$ an Pufferbahnen der dynamischen Puffer.

Vorteilhaft ist es aber auch, wenn einem dynamischen Puffer genau ein Vorsortier-Puffer zugeordnet ist und das Verhältnis zwischen der Anzahl $n_1$ an Rückführbahnen des Vorsortier-Puffers und der Anzahl $n_2$ an Pufferbahnen eines diesem Vorsortier-Puffer zugeordneten dynamischen Puffers gemäß folgender Formel berechnet wird:

$$\frac{n_1}{n_2} = \frac{ta \cdot p \cdot f \cdot c_2 \cdot x}{c_1 \cdot b}$$

Vorteilhaft ist es weiterhin, wenn einem dynamischen Puffer mehrere Vorsortier-Puffer zugeordnet sind und das Verhältnis zwischen der Gesamtanzahl $n_1$ an Rückführbahnen der Vorsortier-Puffer und der Anzahl $n_2$ an Pufferbahnen des diesen Vorsortier-Puffern zugeordneten dynamischen Puffers gemäß folgender Formel berechnet wird:

$$\frac{n_1}{n_2} = \frac{ta \cdot p \cdot m_1 \cdot f \cdot c_2 \cdot x}{c_1 \cdot b}$$

Vorteilhaft ist es schließlich auch, wenn mehreren dynamischen Puffern genau ein Vorsortier-Puffer zugeordnet ist und das Verhältnis zwischen der Anzahl $n_1$ an Rückführbahnen des Vorsortier-Puffers und der Gesamtanzahl $n_2$ an Pufferbahnen der diesem Vorsortier-Puffer zugeordneten dynamischen Puffer gemäß folgender Formel berechnet wird:

$$\frac{n_1}{n_2} = \frac{ta \cdot p \cdot f \cdot c_2 \cdot x}{c_1 \cdot b \cdot m_2}$$

wobei der Parameter $m_2$ einer Gesamtzahl der vom Warenlagersystem umfassten dynamischen Puffer entspricht.

Zum besseren Verständnis der Erfindung wird diese anhand der nachfolgenden Figuren näher erläutert.

Es zeigen jeweils in stark vereinfachter, schematischer Darstellung:

Fig. 1    ein erstes schematisch dargestelltes und beispielhaftes Warenlagersystem;

Fig. 2    wie Fig. 1, nur mit einem Vorsortier-Puffer, der mit dem dynamischen Puffer verbunden ist;

Fig. 3    eine Darstellung eines im dynamischen Puffer integrierten Vorsortier-Puffers;

Fig. 4    wie Fig. 2, nur mit anderen Anschlüssen der Fördereinrichtung an den VorsortierPuffer und den dynamischen Puffer;

Fig. 5    ein schematisch dargestelltes und beispielhaftes Warenlagersystem mit zwei einem dynamischen Puffer zugeordneten Vorsortier-Puffern;

Fig. 6    eine weitere Variante eines Warenlagersystems mit zwei dynamischen Puffern und zwei Vorsortier-Puffern;

Fig. 7    eine Variante eines Warenlagersystems mit zwei dynamischen Puffern mit einem Vorsortier-Puffer und

Fig. 8    ein schematisch dargestelltes und beispielhaftes Warenlagersystem mit einer dem dynamischen Puffer nachgelagerten Sortierstufe und mehreren dem dynamischen Puffer vorgelagerten Umpackstationen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

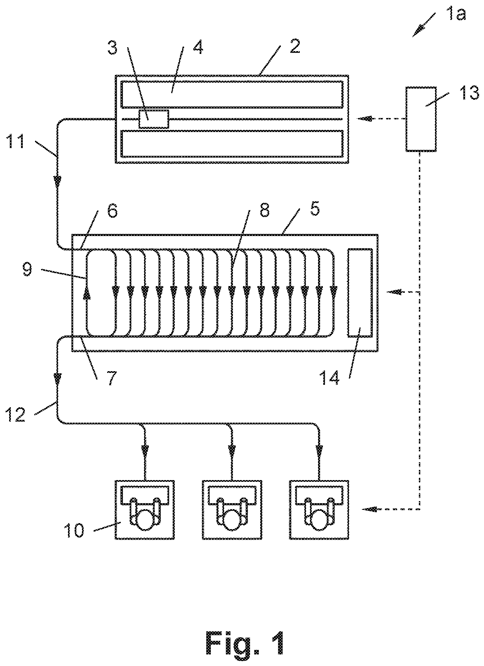

Fig. 1 zeigt ein erstes Beispiel eines Warenlagersystems 1a zum Kommissionieren von Auftrags-Waren, welche zumindest einem mehrere Versandbehälter umfassenden Auftrag zugeordnet sind. Das Warenlagersystem 1a umfasst ein Lager 2, in dem die Auftrags-Waren lagerbar sind. Das Lager 2 wird in diesem Beispiel automatisiert betrieben und weist dazu einen Waren-Manipulator 3 auf, welcher zum Auslagern von Auftrags-Waren aus Lagerregalen 4 ausgebildet ist. Der Waren-Manipulator 3 kann insbesondere als Einebenen-Regalbediengerät oder Mehrebenen-Regalbediengerät ausgebildet sein. Der Aufbau eines automatisierten Lagers 2 ist grundsätzlich bekannt und wird daher hier im Detail nicht beschrieben. Obwohl der Einsatz eines automatisierten Lagers 2 von Vorteil ist, können die Auftrags-Waren prinzipiell auch manuell ausgelagert werden, beispielsweise direkt per Hand oder mit Hilfe eines manuell bedienten Gabelstaplers. Ein Waren-Manipulator 3 kann dann entfallen. Das Lager 2 kann allgemein als Vorratslager und/oder als Retourenwarenlager ausgebildet sein.

Weiterhin umfasst das Warenlagersystem 1a einen dynamischen Puffer 5, welcher insbesondere automatisch betrieben ist, und eine Zuförderstrecke 6 und eine Abförderstrecke 7, mehrere zwischen der Zuförderstrecke 6 und der Abförderstrecke 7 angeordnete Pufferbahnen 8 sowie zumindest eine zwischen der Abförderstrecke 7 und der Zuförderstrecke 6 angeordnete Rückführbahn 9 aufweist.

Zudem umfasst das Warenlagersystem 1a einen Kommissionierarbeitsplatz 10 (hier konkret drei Kommissionierarbeitsplätze 10) zum Befüllen eines am Kommissionierarbeitsplatz 10 bereitgestellten Versandbehälters mit zumindest einer Auftrags-Ware sowie eine Fördereinrichtung 11, welche für den Transport von Auftrags-Waren vom Lager 2 zum dynamischen Puffer 5 hin eingerichtet ist, und eine Fördereinrichtung 12, welche für den Transport von Auftrags-Waren vom dynamischen Puffer 5 zum Kommissionierarbeitsplatz 10 eingerichtet ist. Der Kommissioniervorgang selbst kann automatisch, manuell oder manuell und automatisch gemischt erfolgen.

Ein Auftrags-Rechner 13 des Warenlagersystems 1a dient zur Erfassung eines Auftrags und ist in diesem Beispiel steuerungstechnisch mit dem Lager 2, dem dynamischen Puffer 5 und dem Kommissionierarbeitsplatz 10 verbunden, was mit strichlierten Linien angedeutet ist.

Schließlich weist das Warenlagersystem 1a einen Puffer-Steuerrechner 14 auf, der für die Überprüfung ausgebildet ist, ob ein Teil der im dynamischen Puffer 5 vorrätigen Auftrags-Waren, welche dem Auftrag zugeordnet sind, für die Befüllung einer vorgebbaren Anzahl von Versandbehältern ausreicht und daher verpackungsfertig ist. Weiterhin ist der Puffer-Steuerrechner 14 dazu ausgebildet, den Abtransport dieses verpackungsfertigen Teils an Auftrags-Waren aus dem dynamischen Puffer 5 und den Transport zum Kommissionierarbeitsplatz 10 hin auszulösen. Die vorgegebene Anzahl von Versandbehältern ist dabei kleiner als die zur Erfüllung des Auftrags notwendige Gesamtanzahl an Versandbehältern. Der Puffer-Steuerrechner 14 ist nicht notwendigerweise eigenständig, sondern kann beispielsweise auch Teil des Auftrags-Rechners 13 oder einer anderen Steuereinrichtung im Warenlagersystem 1a sein.

Die Funktion des in Fig. 1 dargestellten Warenlagersystems 1a ist nun wie folgt:
In einem ersten Schritt wird vom Auftrags-Rechner 13 des Warenlagersystems 1a ein Auftrag erfasst. Der Auftrag kann beispielsweise eine Lieferung mehrerer Waren an einen Großhändler, Zwischenhändler oder an ein Geschäftslokal betreffen und in an sich bekannter Weise an das Warenlagersystem 1a übermittelt werden, insbesondere auf elektronischem Weg. Der betreffende Auftrag kann im speziellen einer von mehreren Aufträgen sein, die im Warenlagersystem 1a insbesondere simultan abgearbeitet werden.

In einem weiteren Schritt werden die dem Auftrag zugeordneten Auftrags-Waren aus dem Lager 2 ausgelagert, mit Hilfe der Fördereinrichtung 11 zu dem dynamischen Puffer 5 antransportiert und in wenigstens einer Pufferbahn 8 des dynamischen Puffers 5 zwischengespeichert.

Mit Hilfe des Puffer-Steuerrechners 14 wird (laufend) geprüft ob ein Teil der im dynamischen Puffer 5 vorrätigen Auftrags-Waren für die Befüllung einer vorgebbaren Anzahl von Versandbehältern ausreicht und daher verpackungsfertig ist. Trifft dies zu, so wird der verpackungsfertige Teil der Auftrags-Waren aus dem dynamischen Puffer 5 abtransportiert, mit Hilfe der Fördertechnik 12 zu den Komissionierarbeitsplätzen 10 hin transportiert und dort in die vorgegebene Anzahl von Versandbehältern transferiert. Die vorgegebene Anzahl an Versandbehältern ist dabei kleiner ist als die zur Erfüllung des Auftrags notwendige Gesamtanzahl an Versandbehältern. Der Vollständigkeit halber sei aber erwähnt, dass im Warenlagersystem 1a selbstverständlich auch Aufträge bearbeitet werden können, bei denen zur Aufnahme aller dem Auftrag zugeordneten Waren lediglich ein Versandbehälter nötig ist.

Bei dem vorgeschlagenen System wird also nicht abgewartet, bis alle Auftrags-Waren eines Auftrags im dynamischen Puffer 5 vorrätig sind, sondern es ist lediglich erforderlich, dass eine gewisse Anzahl an Versandbehältern befüllbar ist.

Insbesondere kann die vorgegebene Anzahl an Versandbehältern zur Bildung eines verpackungsfertigen Teils an Auftrags-Waren genau Eins sein. Auf diese Weise wird der dynamische Puffer 5 rasch wieder geleert.

Dementsprechend wird aus dem dynamischer Puffer 5 bereits dann ein erster verpackungsfertiger Teil der Auftrags-Waren abtransportiert, zum Kommissionierarbeitsplatz 10 hin transportiert und dort in den ersten Versandbehälter umgeladen, wenn der besagte erste verpackungsfertige Teil der Auftrags-Waren im dynamischen Puffer 5 vorrätig ist, auch dann, wenn noch nicht alle Auftrags-Waren zur (vollständigen) Erfüllung des Auftrags im dynamische Puffer 5 vorrätig sind. In Folge wird aus dem dynamischer Puffer 5 bereits dann ein zweiter verpackungsfertiger Teil der Auftrags-Waren abtransportiert, zum Kommissionierarbeitsplatz 10 hin transportiert und dort in den zweiten Versandbehälter umgeladen, wenn der besagte zweite verpackungsfertige Teil der Auftrags-Waren im dynamischen Puffer 5 vorrätig ist, auch dann, wenn noch nicht alle Auftrags-Waren zur (vollständigen) Erfüllung des Auftrags im dynamischer Puffer 5 vorrätig sind, und so weiter.

Dementsprechend kann vorgesehen sein, dem dynamischen Puffer 5 den zweiten verpackungsfertigen Teil der Auftrags-Waren erst dann zuzuführen, wenn der erste verpackungsfertige Teil der Auftrags-Waren bereits aus dem dynamischer Puffer 5 abtransportiert wurde. Grundsätzlich ist aber auch vorstellbar, dass der zweite verpackungsfertige Teil der Auftrags-Waren bereits im dynamischen Puffer 5 vorrätig ist, wenn der erste verpackungsfertige Teil der Auftrags-Waren aus dem dynamischen Puffer 5 abtransportiert wird. Besonders vorteilhaft ist es auch, wenn Auftrags-Waren (laufend und) unabhängig vom Abtransport eines verpackungsfertigen Teils der Auftrags-Waren aus dem dynamischer Puffer 5 in den dynamischen Puffer 5 transportiert werden.

Das Umladen in Versandbehälter kann gesammelt erfolgen, das heißt der erste Versandbehälter muss nicht unmittelbar nach dem Auslagern des ersten verpackungsfertigen Teils der Auftrags-Waren beladen werden, sondern die Beladung des ersten Versandbehälters kann solange verzögert werden, bis auch ein zweiter Teil (oder auch noch weitere Teile) am Kommissionierarbeitsplatz vorhanden ist/sind und demnach ein zweiter Versandbehälter beladen werden kann. Besonders vorteilhaft ist es in diesem Fall, wenn am Kommissionierarbeitsplatz ein Zwischenspeicher für die noch nicht umgeladenen Teile der Auftrags-Waren in die Versandbehälter und/oder ein Zwischenspeicher für die Versandbehälter angeordnet ist.

Angemerkt wird auch, dass der verpackungsfertige Teil der Auftrags-Waren auch durch genau ein Stück einer Ware gebildet sein kann.

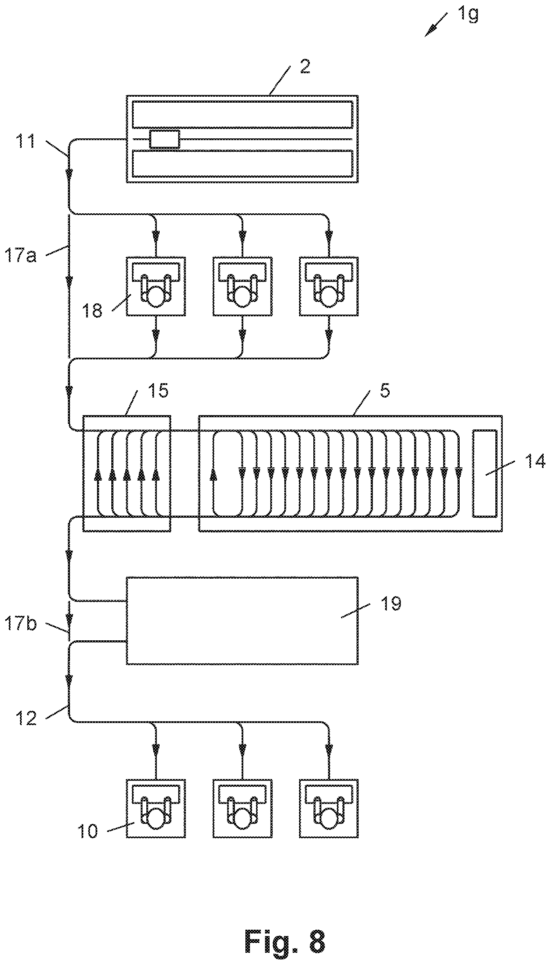

Die vorgegebene Anzahl an Versandbehältern kann aber auch größer als Eins sein. Dadurch wird eine höhere Anzahl an Auftrags-Waren auf einmal aus dem dynamischen Puffer 5 ausgelagert, wodurch die nachfolgende Behandlung des Förderstroms unter Umständen vereinfacht ist. Besonders vorteilhaft ist diese Vorgangsweise im Zusammenhang mit einer dem dynamischen Puffer 5 nachgeschalteten Sortierstufe, welche durch die vorgeschlagene Vorgangsweise optimal betrieben werden kann (siehe hierzu auch Fig. 8).

Die relativ geringe Größe eines verpackungsfertigen Teils an Auftrags-Waren ist die Verweildauer der Auftrags-Waren im dynamischen Puffer 5 nur sehr kurz. Daher sind nur vergleichsweise kleine dynamische Puffer 5 für den Betrieb des Warenlagersystems 1a nötig. Durch die gegenüber dem Stand der Technik deutlich verringerte Anzahl an Auftrags-Waren, die zur Bildung eines verpackungsfertigen Teils benötigt werden (das heißt "qualifizierende Auftrags-Waren"), kann der dynamische Puffer 5 auch besonders effizient betrieben werden. Beispielsweise ist die Wahrscheinlichkeit hoch, dass ein verpackungsfertiger Teil nur eine einzige Pufferbahn 8 belegt, wodurch der Abtransport der Auftrags-Waren aus dem dynamischen Puffer 5 wesentlich vereinfacht wird. Daher entstehen (ohne weitere Maßnahmen) gewünschte, weitgehend kontinuierliche Förderströme innerhalb des Warenlagersystems 1a. Diese Förderströme weisen auch eine bessere Effizienz auf, das heißt einen hohen Ordnungsgrad beziehungsweise einen hohen Grad an Sortierung innerhalb des Stroms.

Generell ist es ein Ziel, einen verpackungsfertigen Teil nach Möglichkeit in einer einzigen Pufferbahn 8 zwischenzuspeichern. Dieses Ziel ist mit einer Vielzahl an möglichen Ausführungsformen eines dynamischen Puffers 5 erreichbar, insbesondere mit einer Vielzahl an Längen-/Breiten-Verhältnissen beziehungsweise mit einer Vielzahl an Längen-/Höhen-Verhältnissen, je nachdem in welchen Dimensionen sich der dynamische Puffer 5 erstreckt. Das heißt, der Konstrukteur eines Warenlagersystems 1a hat hinsichtlich des dynamischen Puffers 5 große Gestaltungsfreiheit. Dies führt dazu, dass der dynamische Puffer 5 vergleichsweise gut in den Aufbau eines Warenlagersystems 1a integriert werden kann.

Das genannte Ziel ist insbesondere auch mit kurzen Pufferbahnen 8 erreichbar. Kurze Pufferbahnen 8 weisen eine bessere Energieeffizienz auf, da die Wahrscheinlichkeit für die Bewegung von Auftrags-Waren, die nicht einem verpackungsfertigen Teil angehören (das heißt "nicht-qualifizierende Auftrags-Waren"), sinkt und damit auch der Anteil an Energie, die für die an sich unnötige Bewegung nicht-qualifizierender Auftrags-Waren benötigt wird.

Ohne weitere Maßnahmen, ist das Ziel, dass Auftrags-Waren gruppiert im dynamischen Puffer 5 gespeichert werden, das heißt, dass direkt aufeinanderfolgende Auftrags-Waren an der Zuförderstrecke 6 des dynamischen Puffers 5 nur Auftrags-Waren eines einzigen Auftrags bilden, nicht oder kaum erreichbar. In diesem Fall werden Auftrags-Waren mehrerer Aufträge untereinander vermischt zu dem dynamischen Puffer 5 antransportiert und in der wenigstens einen Pufferbahn 8 des dynamischen Puffers 5 zwischengespeichert. Weitere Waren, die sich in der Pufferbahn 8, in welcher der verpackungsfertige Teil der Auftrags-Waren zwischengespeichert ist, zwischen den Auftrags-Waren des verpackungsfertigen Teils befinden, werden beim Abtransport des verpackungsfertigen Teils aus dem dynamischen Puffer 5 über die Rückführbahn 9 in den dynamischen Puffer 5 rückgeführt. Dadurch werden einerseits die Auftrags-Waren "auftragsrein" ausgelagert, andererseits wird der Ordnungsgrad der im dynamischen Puffer 5 befindlichen Auftrags-Waren erhöht.

Eine Gruppierung der Auftrags-Waren nach Aufträgen ist zwar von Vorteil, jedoch nicht die einzig vorstellbare Möglichkeit. Denkbar ist auch, dass die Auftrags-Waren in Bezug auf mehrere Versandbehälter und/oder Waren-Gruppen sortiert beziehungsweise gruppiert im dynamischen Puffer 5 zwischengespeichert werden.

Beispielsweise enthalten die Auftrags-Waren Kleidungsstücke, und die Eigenschaften zur Bildung einer Waren-Gruppe betreffen eine Farbe des Kleidungsstücks und/oder eine Art des Kleidungsstücks und/oder eine Größe des Kleidungsstücks. Eine Art des Kleidungstückes kann beispielsweise die Unterscheidung nach Farbe, die Unterscheidung Shirt/Bluse/Hemd, gemustert/unicolor, Damen/Herren/unisex, etc. betreffen. Selbstverständlich sind auch Kombinationen der genannten Eigenschaften möglich.

In einer vorteilhaften Ausführungsform des vorgestellten Systems werden die Auftrags-Waren nun anhand ihrer Eigenschaften zumindest einer Waren-Gruppe zugeordnet, und ein Versandbehälter wird nur mit Auftrags-Waren einer einzigen Waren-Gruppe befüllt. Dadurch wird ein Manipulieren und insbesondere Einlagern der Auftrags-Waren an einem Zielort, den die Versandbehälter nach dem Versand erreichen, vereinfacht. Denkbar ist aber natürlich auch, dass ein Versandbehälter mit Auftrags-Waren mehrerer Waren-Gruppen befüllt wird. Dadurch können die Versandbehälter auch dann vollständig aufgefüllt werden, wenn die Anzahl an Auftrags-Waren einer Waren-Gruppe dazu nicht ausreichen würde.

Eine Gruppierung von Auftragswaren kann nun beispielsweise dadurch erfolgen, dass

a) je eine Auftrags-Ware je einem Auftrag zugeordnet ist und die Auftrags-Waren mehrerer Aufträge gruppiert nach Aufträgen zu dem dynamischen Puffer 5 antransportiert und in der wenigstens einen Pufferbahn 8 des dynamischen Puffers 5 zwischengespeichert werden oder

b) je eine Auftrags-Ware je einem Versandbehälter zugeordnet ist und die Auftrags-Waren mehrerer Versandbehälter gruppiert nach Versandbehältern zu dem dynamischen Puffer 5 antransportiert und in der wenigstens einen Pufferbahn 8 des dynamischen Puffers 5 zwischengespeichert werden oder

c) eine Auftrags-Ware einer Waren-Gruppe zugeordnet ist, wobei Auftrags-Waren mehrerer Waren-Gruppen gruppiert nach Waren-Gruppen zu dem dynamischen Puffer 5 antransportiert und in der wenigstens einen Pufferbahn 8 des dynamischen Puffers 5 zwischengespeichert werden.

Ist dies nicht möglich oder erwünscht, so kann eine Gruppierung oder Bildung von "Clustern" auf Basis der Aufträge/Versandbehälter/Waren-Gruppen auch dadurch erfolgen, dass ein Vorsortier-Puffer mit dem dynamischen Puffer 5 verbunden ist.

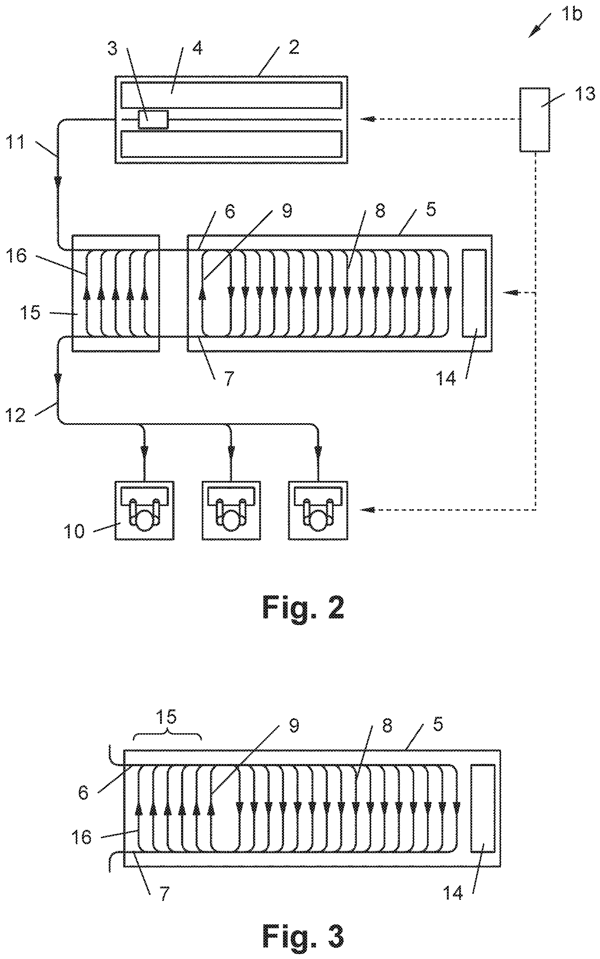

Fig. 2 zeigt dazu ein Beispiel, das dem in Fig. 1 dargestellten Warenlagersystem 1a sehr ähnlich ist. Das Warenlagersystem 1b weist jedoch im Unterschied dazu einen mit dem dynamischen Puffer 5 verbundenen Vorsortier-Puffer 15 auf, welcher mehrere Rückführbahnen 16 aufweist, und der dazu eingerichtet ist, Auftrags-Waren mehrerer Aufträge/Versandbehälter/Waren-Gruppen auf Basis der Aufträge/Versandbehälter/Waren-Gruppen zu gruppieren.

In diesem Fall können Auftrags-Waren mehrerer Aufträge/Versandbehälter/Waren-Gruppen untereinander vermischt zu dem dynamischen Puffer 5 antransportiert und in der wenigstens einen Pufferbahn 8 des dynamischen Puffers 5 zwischengespeichert werden. Direkt aufeinanderfolgende Auftrags-Waren an der Zuförderstrecke 6 des dynamischen Puffers 5 bilden dann also nicht nur Auftrags-Waren eines einzigen Auftrags / eines einzigen Versandbehälters / einer einzigen Waren-Gruppe. Die Gruppierung beziehungsweise die Bildung von "Clustern" auf Basis der Aufträge/Versandbehälter/Waren-Gruppen erfolgt stattdessen später im Vorsortier-Puffer 15. Diese Bildung von Gruppen oder Clustern ist für den Ablauf des nachfolgenden Teils des Kommissioniervorgangs von Vorteil, insbesondere für das Verpacken der Auftrags-Waren. Da die Auftrags-Waren im Vorsortier-Puffer 15 gruppiert werden, kann dieser auch als "Gruppier-Puffer" gesehen werden.

Mit dem vorgeschlagenen Verfahren wird der Ordnungsgrad der im dynamischen Puffer 5 zwischengespeicherten Auftrags-Waren erhöht. Im Optimalfall wird eine Vermischung unterschiedlicher Aufträge/Versandbehälter/Waren-Gruppen völlig aufgehoben. Denkbar ist aber auch, dass Auftrags-Waren unterschiedlicher Aufträge/Versandbehälter/Waren-Gruppen auch nach Durchlaufen des Vorsortier-Puffers 15 geringfügig durchmischt sind. Gegebenenfalls kann der Vorsortier-Puffer 15 auch mehrmals durchlaufen werden, um den Ordnungsgrad im dynamischen Puffer 5 Schritt für Schritt zu erhöhen.

Generell kann der Vorsortier-Puffer 15 als Teil des dynamischen Puffers 5 aufgefasst werden, so wie das in Fig. 3 dargestellt ist. Der dynamische Puffer 5 hat dann nicht nur eine Rückführbahn 9, sondern mehrere Rückführbahnen 9, die wenigstens zum Teil für das Sortieren der Auftrags-Waren genutzt werden. Die grundsätzliche Funktion ist aber die gleiche wie bei der in Fig. 2 dargestellten Anordnung.

Bei der vorgeschlagenen Ausführungsvariante kann also

a) je eine Auftrags-Ware je einem Auftrag zugeordnet sein, wobei

- die Auftrags-Waren mehrerer Aufträge untereinander vermischt zu dem dynamischen Puffer 5 antransportiert und in der wenigstens einen Pufferbahn 8 des dynamischen Puffers 5 zwischengespeichert werden und

- die Auftrags-Waren mehrerer Aufträge vom dynamischen Puffer 5 in einen mit dem dynamischen Puffer 5 verbundenen Vorsortier-Puffer 15 transportiert und dort auf Basis der Aufträge gruppiert werden oder

b) je eine Auftrags-Ware je einem Versandbehälter zugeordnet sein, wobei

- die Auftrags-Waren mehrerer Versandbehälter untereinander vermischt zu dem dynamischen Puffer 5 antransportiert und in der wenigstens einen Pufferbahn 8 des dynamischen Puffers 5 zwischengespeichert werden und
- die Auftrags-Waren mehrerer Versandbehälter vom dynamischen Puffer 5 in einen mit dem dynamischen Puffer 5 verbundenen Vorsortier-Puffer 15 transportiert und dort auf Basis der Versandbehälter gruppiert werden oder

c) eine Auftrags-Ware einer Waren-Gruppe zugeordnet sein, wobei

- die Auftrags-Waren mehrerer Waren-Gruppen untereinander vermischt zu dem dynamischen Puffer 5 antransportiert und in der wenigstens einen Pufferbahn 8 des dynamischen Puffers 5 zwischengespeichert werden und
- die Auftrags-Waren mehrerer Waren-Gruppen vom dynamischen Puffer 5 in einen mit dem dynamischen Puffer 5 verbundenen Vorsortier-Puffer 15 transportiert und dort auf Basis der Waren-Gruppen gruppiert werden.

Denkbar ist darüber hinaus auch, dass in den Gruppen noch Untergruppen gebildet werden, beziehungsweise die Gruppierung oder Bildung von "Clustern" auf mehreren Ebenen erfolgt. Beispielsweise

i) liegt für Auftrags-Waren eine Kombination der Fälle a) und b) vor, und innerhalb der Gruppierung auf Basis der Aufträge erfolgt eine Gruppierung auf Basis der Versandbehälter oder
ii) liegt für Auftrags-Waren eine Kombination der Fälle a) und c) vor, und innerhalb der Gruppierung auf Basis der Aufträge erfolgt eine Gruppierung auf Basis der Waren-Gruppen oder
iii) liegt für Auftrags-Waren eine Kombination der Fälle b) und c) vor, und innerhalb der Gruppierung auf Basis der Versandbehälter erfolgt eine Gruppierung auf Basis der Waren-Gruppen oder umgekehrt oder
iv) liegt für Auftrags-Waren eine Kombination der Fälle a) und b) und c) vor, und innerhalb der Gruppierung auf Basis der Aufträge eine erfolgt Gruppierung auf Basis der Versandbehälter, und innerhalb der Gruppierung auf Basis der Versandbehälter erfolgt eine Gruppierung auf Basis der Waren-Gruppen oder
v) liegt für Auftrags-Waren eine Kombination der Fälle a) und b) und c) vor, und innerhalb der Gruppierung auf Basis der Aufträge erfolgt eine Gruppierung auf Basis der Waren-Gruppen, und innerhalb der Gruppierung auf Basis der Waren-Gruppen erfolgt eine Gruppierung auf Basis der Versandbehälter.

Auf diese Weise wird der Ordnungsgrad im Warenstrom der Auftrags-Waren noch weiter erhöht, wodurch der Ablauf des nachfolgenden Teils des Kommissioniervorgangs noch weiter verbessert wird, insbesondere das Verpacken der Auftrags-Waren.

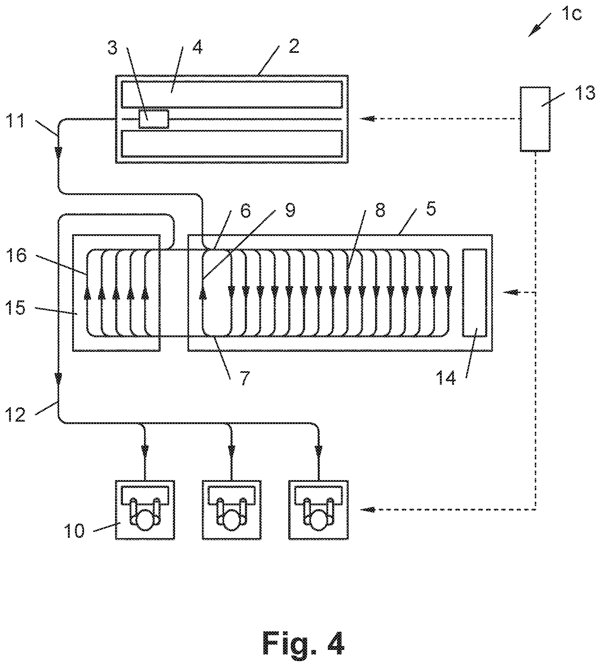

Fig. 4 zeigt eine alternative Ausführungsform eines Warenlagersystems 1c, das dem in Fig. 2 dargestellten Warenlagersystem 1b sehr ähnlich ist. Im Unterschied dazu ist die Fördertechnik 11, 12 an anderen Punkten mit dem dynamischen Puffer 5 beziehungsweise mit dem Vorsortier-Puffer 15 verbunden. Konkret befindet sich die Einmündung für die Fördertechnik 11 direkt am Beginn des dynamischen Puffers 5 und die Ausmündung der Fördertechnik 12 am Ende des Vorsortier-Puffers 15. Auf diese Weise passieren die zu dem dynamischen Puffer 5 antransportierten Auftrags-Waren nicht zwingend den Vorsortier-Puffer 15 und die aus dem Vorsortier-Puffer 15 abtransportierten Auftrags-Waren nicht zwingend den dynamischen Puffer 5.

In dem in Fig. 2 dargestellten Beispiel des Warenlagersystems 1b und in dem in Fig. 4 dargestellten Beispiel des Warenlagersystems 1c ist dem dynamischen Puffer 5 genau ein Vorsortier-Puffer 15 zugeordnet. Dadurch ist der Verfahrensablauf beim Bilden von Gruppen besonders einfach, und es treten zwischen mehreren dynamischen Puffern 5 keine Blockaden auf. Dies ist zwar vorteilhaft, dennoch sind auch noch andere Ausführungsformen denkbar.

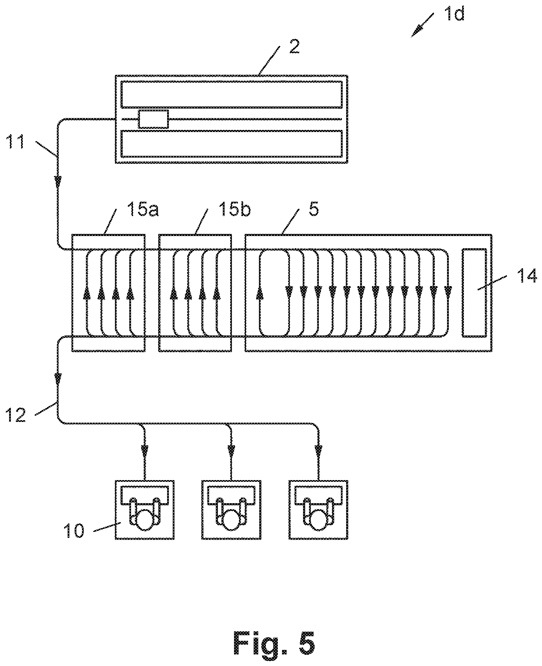

Beispielsweise zeigt die Fig. 5 ein Warenlagersystem 1d, bei dem einem dynamischen Puffer 5 mehrere Vorsortier-Puffer 15a, 15b zugeordnet sind, hier zwei Vorsortier-Puffer 15a, 15b. Dadurch steht für den dynamischen Puffer 5 eine besonders hohe Sortierleistung zur Verfügung.

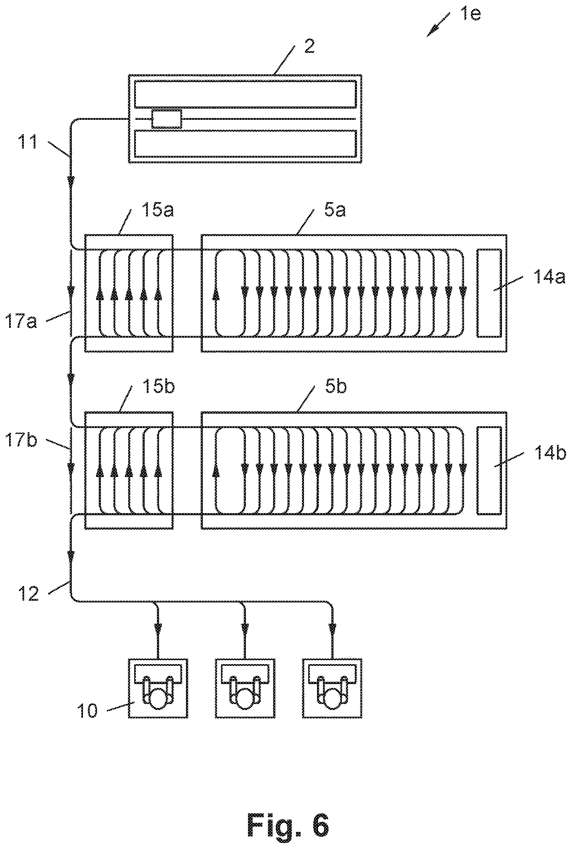

Denkbar ist auch, dass mehreren (automatisch betriebenen) dynamischen Puffern 5a, 5b jeweils ein Vorsortier-Puffer 15a, 15b zugeordnet ist, so wie das in der Fig. 6 dargestellt ist. Konkret umfasst das Warenlagersystem 1e zwei dynamische Puffer 5a, 5b und zwei Vorsortier-Puffer 15a, 15b. Selbstverständlich können aber auch mehr als zwei dynamische Puffer 5a, 5b und mehr als zwei Vorsortier-Puffer 15a, 15b vorgesehen sein. Zudem umfasst das Warenlagersystem 1e Bypass-Bahnen 17a, 17b, über welche Auftrags-Waren unter Umgehung des dynamischen Puffers 5a, 5b geleitet werden können.

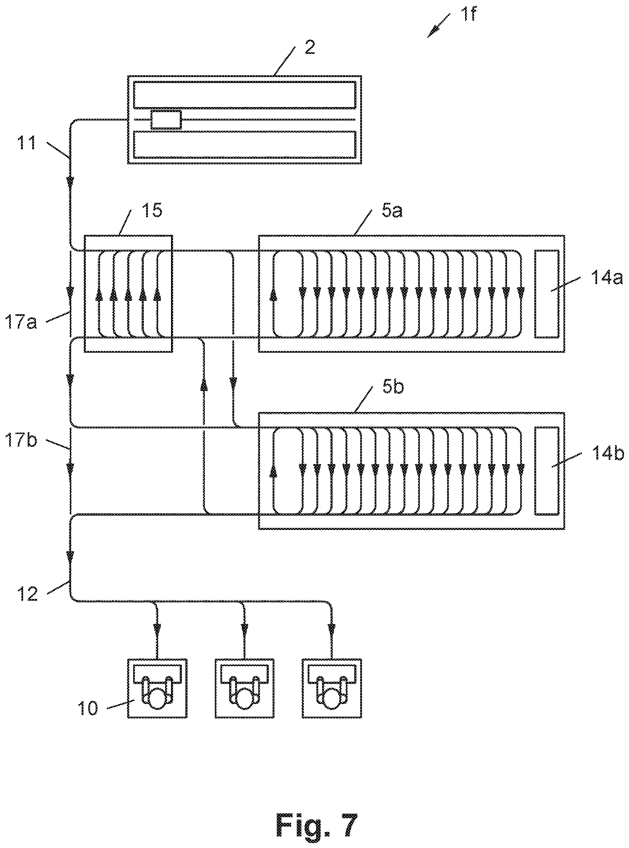

Fig. 7 zeigt schließlich ein Beispiel eines Warenlagersystems 1f, bei dem ein Vorsortier-Puffer 15 mehreren dynamischen Puffern 5a, 5b zugeordnet ist. Dadurch benötigt das Warenlagersystem 1f insgesamt vergleichsweise wenig Platz.

Generell ist es von Vorteil, wenn ein Verhältnis zwischen einer im Warenlagersystem la..lg vorgesehenen Gesamtanzahl $n_1$ an Rückführbahnen 16 des zumindest einen Vorsortier-Puffers 15, 15a, 15b und der im Warenlagersystem 1a..1g vorgesehenen Gesamtanzahl $n_2$ an Pufferbahnen 8 des zumindest einen dynamischen Puffers 5, 5a, 5b

$$\frac{n_1}{n_2} = \frac{ta \cdot p \cdot m_1 \cdot f \cdot c_2 \cdot x}{c_1 \cdot b}$$

beträgt. Dabei ist

- $ta$ eine von einer Auftrags-Ware vom dynamischen Puffer 5, 5a, 5b zum Vorsortier-Puffer 15, 15a, 15b durchschnittlich benötigte Transportzeit,
- $p$ eine vom Vorsortierpuffer 15, 15a, 15b je Zeiteinheit bereitzustellende Anzahl an Auftrags-Waren,
- $c_1$ eine in einer Rückführbahn 16 des Vorsortier-Puffers 15, 15a, 15b speicherbare Anzahl an Auftrags-Waren,
- $m_1$ eine Gesamtzahl der vom Warenlagersystem la..lg umfassten Vorsortier-Puffer 15, 15a, 15b,
- $b$ eine gleichzeitig im dynamischen Puffer 5, 5a, 5b zwischenspeicherbare Anzahl an Auftrags-Waren,
- $f$ ein durchschnittlicher Füllgrad der Pufferbahnen 8 des dynamischen Puffers 5, 5a, 5b und
- $c_2$ eine in einer Pufferbahn 8 des dynamischen Puffers 5, 5a, 5b speicherbare Anzahl an Auftrags-Waren.
- Für $x$ wird ein Wert von 1,5 gewählt, wenn die letzte einen Ausgang des dynamischen Puffers 5, 5a, 5b passierende Auftrags-Ware des Auftrags die Auslagerung weiterer Auftrags-Waren auslöst, und für $x$ wird ein Wert von 2,0 gewählt, wenn die letzte einen Eingang des Vorsortier-Puffers 15, 15a, 15b passierende Auftrags-Ware des Auftrags die Auslagerung weiterer Auftrags-Waren auslöst. Ansonsten wird ein dazwischen liegender Wert gewählt.

Der Parameter $ta$ kann auch als Zugriffszeit betrachtet oder bezeichnet werden, $p$ als Prozessleistung, $c_1$ als Bahnkapazität des Vorsortierpuffers 15, 15a, 15b, $b$ als Batchgröße, $c_2$ als Bahnkapazität des dynamischen Puffers 5, 5a, 5b und $x$ als Sequenzpunkt-Faktor.

Die Batchgröße $b$ ist auch eine Maßzahl für eine Anzahl an Auftrags-Waren der im Warenlagersystem la..lg gleichzeitig bearbeiteten Gruppen an Aufträgen. Der Sequenzpunkt-Faktor $x$ berücksichtigt, wie zeitnah eine erforderliche Nachförderung von Waren aus dem dynamischen Puffer 5, 5a, 5b in den Vorsortierpuffer 15, 15a, 15b ausgelöst wird beziehungsweise tatsächlich erfolgt, nachdem ein entsprechender Bedarf registriert wurde. Liegt der Sequenzpunkt am Eingang des Vorsortierpuffers 15, 15a, 15b, dann wird für den Sequenzpunkt-Faktor $x$ der Wert 2,0 gewählt. Liegt der Sequenzpunkt am Ausgang des dynamischen Puffers 5, 5a, 5b, dann wird für den Sequenzpunkt-Faktor $x$ der Wert 1,5 gewählt. Liegt der Sequenzpunkt zwischen dem Ausgang des dynamischen Puffers 5, 5a, 5b und dem Eingang des Vorsortierpuffers 15, 15a, 15b, dann wird für den Sequenzpunkt-Faktor $x$ ein repräsentativer Wert (d.h. ein linear interpolierter Wert) zwischen 1,5 und 2,0 gewählt.

Die Formel für das Verhältnis zwischen der im Warenlagersystem la..lg vorgesehenen Gesamtanzahl $n_1$ an Rückführbahnen 16 von Vorsortier-Puffern 15, 15a, 15b und der im Warenlagersystem 1a..1g vorgesehenen Gesamtanzahl $n_2$ an Pufferbahnen 8 von dynamischen Puffern 5, 5a, 5b kann auch auf die Anzahl an Ladehilfsmitteln anstelle der Anzahl der Auftrags-Waren bezogen werden. In diesem Fall ist in der angegebenen Formel anstelle der Anzahl der Auftrags-Waren die durchschnittliche Füllmenge der Ladehilfsmittel mit Auftrags-Waren einzusetzen. Dabei ist es unerheblich, ob alle Ladehilfsmittel dieselbe Menge an Auftrags-Waren beinhalten, oder ob die Ladehilfsmittel unterschiedliche Mengen an Auftrags-Waren aufnehmen.

In einem illustrativen Beispiel wird angenommen, dass die Zugriffszeit $ta=95$ sek beträgt, die Prozessleistung $p=8000$ Einheiten/h entsprechend 2,22 Einheiten/sek beträgt, die Gesamtzahl $m_1$ der vom Warenlagersystem 1a..1g umfassten Vorsortier-Puffer 15, 15a, 15b 1 beträgt, die Bahnkapazität $c1$ des Vorsortierpuffers 15, 15a, 15b 216 Einheiten beträgt, die Batchgröße $b=8000$ Einheiten beträgt, für den Füllgrad $f=85$ % gewählt wird, die Bahnkapazität $c2$ des dynamischen Puffers 5, 5a, 5b 216 Einheiten beträgt und für den Sequenzpunkt-Faktor $x=2$ gewählt wird. Der Sequenzpunkt liegt demgemäß am Ausgang des dynamischen Puffers 5, 5a, 5b. Die genannten Einheiten können Auftrags-Waren sein oder Ladehilfsmittel, wenn diese verwendet werden.

Für das Verhältnis zwischen der im Warenlagersystem la..lg vorgesehenen Gesamtanzahl $n_1$ an Rückführbahnen 16 der Vorsortier-Puffer 15, 15a, 15b und der im Warenlagersystem la..lg vorgesehenen Gesamtanzahl $n_2$ an Pufferbahnen 8 der dynamischen Puffer 5, 5a, 5b ergibt sich:

$$\frac{n_1}{n_2} = \frac{ta \cdot p \cdot m_1 \cdot f \cdot c_2 \cdot x}{c_1 \cdot b}$$

$$\frac{n_1}{n_2} = \frac{95 \cdot 2,22 \cdot 1 \cdot 0,85 \cdot 216 \cdot 2}{216 \cdot 8000} = 4,5\%$$

Das heißt, dass die Lagerkapazität der Vorsortier-Puffer 15, 15a, 15b im Warenlagersystem 1a.. 1g in diesem Beispiel rund 1/22 der Lagerkapazität der dynamischen Puffer 5, 5a, 5b im Warenlagersystem la..lg beträgt. Im Verhältnis zu den dynamischen Puffern 5, 5a, 5b sind die Vorsortier-Puffer 15, 15a, 15b also vergleichsweise klein, wodurch der Vorteil des vorgeschlagenen Verfahrens und Warenlagersystems la..lg zum Kommissionieren von Waren hier besonders zu Tage tritt.

Das angegebene Beispiel soll, wie erwähnt, nur illustrativ zeigen, dass die gewählte Vorgangsweise zu relativ kleinen Vorsortier-Puffern 15, 15a, 15b führt. Selbstverständlich sind die gewählten Werte nicht einschränkend zu verstehen, sondern die angegebene Formel bezieht sich auf eine Vielzahl an möglichen Warenlagersystemen la..lg, und es können auch andere Werte eingesetzt werden.

Der Vollständigkeit halber wird auch angemerkt, dass in einem realen Warenlagersystem la..lg selbstverständlich nur natürliche Zahlen für die Anzahl $n_1$ an Rückführbahnen 16 und die Anzahl $n_2$ an Pufferbahnen 8 in Frage kommen. Bei der Planung beziehungsweise Ausführung eines Warenlagersystem la..lg sind eventuelle Nachkommastellen aufzurunden oder gegebenenfalls auch abzurunden. Insbesondere bei einer Abrundung sollte natürlich bedacht werden, dass die reale Kapazität der Rückführbahnen 16 beziehungsweise der Pufferbahnen 8 dann kleiner ist als der rechnerisch erhaltene Wert, wodurch eine angenommene Leistung nicht erreicht werden kann. Dagegen existieren bei einer Aufrundung gegenüber dem rechnerisch erhaltenen Wert dementsprechende Reserven im realen System.

Weiterhin wird angemerkt, dass sich die angegebene Formel auf das Verhältnis zwischen der im Warenlagersystem 1a..1g vorgesehenen Gesamtanzahl $n_1$ an Rückführbahnen 16 der Vorsortier-Puffer 15, 15a, 15b und der im Warenlagersystem la..lg vorgesehenen Gesamtanzahl $n_2$ an Pufferbahnen 8 der dynamischen Puffer 5, 5a, 5b bezieht und damit insbesondere auf alle in den Figuren 2 bis 8 dargestellte Warenlagersysteme la..lg. Ähnliche Formeln können aber auch für bestimmte Kombinationen von Vorsortier-Puffern 15, 15a, 15b mit dynamischen Puffern 5, 5a, 5b aufgestellt werden.

Beispielsweise lautet das Verhältnis zwischen der Anzahl $n_1$ an Rückführbahnen 16 eines Vorsortier-Puffers 15, 15a, 15b und der Anzahl $n_2$ an Pufferbahnen 8 eines diesem Vorsortier-Puffer 15, 15a, 15b zugeordneten dynamischen Puffers 5, 5a, 5b (siehe dazu auch die in den Figuren 2, 3, 4, 6, und 8 dargestellten Warenlagersysteme 1a..1g):

$$\frac{n_1}{n_2} = \frac{ta \cdot p \cdot f \cdot c_2 \cdot x}{c_1 \cdot b}$$

Das heißt, einem dynamischen Puffer 5, 5a, 5b ist in diesem Beispiel genau ein Vorsortier-Puffer 15, 15a, 15b zugeordnet.

Sind einem dynamischen Puffer 5, 5a, 5b mehrere Vorsortier-Puffer 15, 15a, 15b zugeordnet, dann lautet das Verhältnis zwischen der Gesamtanzahl $n_1$ an Rückführbahnen 16 der Vorsortier-Puffer 15, 15a, 15b und der Anzahl $n_2$ an Pufferbahnen 8 des diesen Vorsortier-Puffern 15, 15a, 15b zugeordneten dynamischen Puffers 5, 5a, 5b (siehe dazu auch die Fig. 5):

$$\frac{n_1}{n_2} = \frac{ta \cdot p \cdot m_1 \cdot f \cdot c_2 \cdot x}{c_1 \cdot b}$$

Ist mehreren dynamischen Puffern 5, 5a, 5b genau ein Vorsortier-Puffer 15, 15a, 15b zugeordnet, dann lautet das Verhältnis zwischen der Anzahl $n_1$ an Rückführbahnen 16 des Vorsortier-Puffers 15, 15a, 15b und der Gesamtanzahl $n_2$ an Pufferbahnen 8 der diesem Vorsortier-Puffer 15, 15a, 15b zugeordneten dynamischen Puffer 5, 5a, 5b (siehe dazu auch die Fig. 7):

$$\frac{n_1}{n_2} = \frac{ta \cdot p \cdot f \cdot c_2 \cdot x}{c_1 \cdot b \cdot m_2}$$

Der Parameter $m_2$ entspricht dabei einer Gesamtzahl der vom Warenlagersystem 1a..1g umfassten dynamischen Puffer 5, 5a, 5b.

Fig. 8 zeigt nun ein Beispiel eines Warenlagersystems 1g, bei dem zwischen dem Lager 2 und dem dynamischen Puffer 5 Umpackstationen 18 zum Umpacken der vom Lager 2 kommenden Auftrags-Waren auf Ladehilfsmittel vorgesehen sind, sowie eine zwischen dem dynamischen Puffer 5 und dem Kommissionierarbeitsplatz 10 angeordnete Sortierstufe 19 vorgesehen ist, die dazu eingerichtet ist, eine am Kommissionierarbeitsplatz 10 gewünschte Reihenfolge der Auftrags-Waren herzustellen. Insbesondere arbeitet die Sortierstufe 19 auf Basis eines Radix-Algorithmus. Solche Sortierstufen 19 sind auch unter dem Begriff "Matrix-Sortierer" bekannt. Im Speziellen weist ein solcher Matrix-Sortierer 19 drei Stufen mit jeweils sechs Bahnen auf.

Vorteilhaft werden

- die dem Auftrag zugeordneten Auftrags-Waren unsortiert zu dem dynamischen Puffer 5 antransportiert und in der wenigstens einen Pufferbahn 8 des dynamischen Puffers 5 zwischengespeichert, und
- die Auftrags-Waren durchlaufen nach dem Abtransport aus dem dynamischen Puffer 5 und vor dem Eintreffen am Kommissionierarbeitsplatz 10 die Sortierstufe 19, in der eine am Kommissionierarbeitsplatz 10 gewünschte Reihenfolge der Auftrags-Waren hergestellt wird.

Das heißt, beim Antransport zu dem dynamischen Puffer 5 weisen die dem Auftrag zugeordneten Auftrags-Waren noch nicht die am Kommissionierarbeitsplatz 10 gewünschte Reihenfolge auf. Dadurch kann der Antransport der Auftrags-Waren zu dem dynamischen Puffer 5 und insbesondere das Auslagern der Auftrags-Waren aus dem Lager 2 beziehungsweise auch ein Umlagern der Auftrags-Waren in ein Ladehilfsmittel vergleichsweise flexibel erfolgen, da dabei keine bestimmte Reihenfolge eingehalten werden muss. Diese wird erst in einer dem dynamischen Puffer 5 nachfolgenden Sortierstufe 19 hergestellt.

Grundsätzlich wäre es aber auch denkbar, dass die Auftrags-Waren (in Bezug auf den Auftrag) sortiert zu dem dynamischen Puffer 5 antransportiert und in der wenigstens einen Pufferbahn 8 des dynamischen Puffers 5 zwischengespeichert werden. Das heißt, Auftrags-Waren eines Auftrags werden dann in einer am Kommissionierarbeitsplatz 10 gewünschten Reihenfolge zu dem dynamischen Puffer 5 antransportiert und in der wenigstens einen Pufferbahn 8 des dynamischen Puffers 5 zwischengespeichert. Das Durchlaufen einer dem dynamischen Puffer 5 nachgeschalteten Sortierstufe 19 kann dann entfallen.

Mit Hilfe von Umpackstationen 18 können die Auftrags-Waren nach dem Auslagern aus dem Lager 2 und vor dem Antransport zu dem dynamischen Puffer 5 in oder auf Ladehilfsmittel umgepackt werden. Dadurch können nicht oder schwer transportierbare Waren transportfähig gemacht werden. Die Verwendung von Ladehilfsmitteln ermöglicht darüber hinaus einen wenig störanfälligen Betrieb des Warenlagersystems 1g.

Die Waren können natürlich auch im Lager 2 in Ladehilfsmitteln gelagert werden, entweder in denselben Ladehilfsmitteln, die im dynamischen Puffer 5 verwendet werden oder in anderen Ladehilfsmitteln (insbesondere in Kartons). Als Ladehilfsmittel kommen insbesondere Hängetaschen, Behälter oder Tablare in Betracht. Eine Hängetasche ist generell sehr platzsparend und bietet guten Schutz für die darin befindliche Ware.

Von Vorteil ist es zum Beispiel, wenn in einem Ladehilfsmittel genau eine Auftrags-Ware enthalten ist. Dadurch können die Auftrags-Waren auf besonders flexible Weise kommissioniert werden. Denkbar ist aber auch, dass in einem Ladehilfsmittel mehr als eine Auftrags-Ware enthalten ist. Auf diese Weise kann der dynamische Puffer 5 noch kleiner gestaltet werden, da die Auftrags-Waren darin in höherer Dichte zwischengespeichert werden. Selbstverständlich ist es auch möglich, dass einige Ladehilfsmittel nur eine Auftrags-Ware enthalten, andere Ladehilfsmittel dagegen mehr als eine Auftrags-Ware.

Der Vollständigkeit halber wird angemerkt, dass Umpackstationen 18 und eine Sortierstufe 19 nicht zwingend gemeinsam in einem Warenlagersystem 1g vorhanden sein müssen. Denkbar ist vielmehr auch, dass das Warenlagersystem 1g nur eine Umpackstation 18 oder mehrere Umpackstationen 18 oder nur eine Sortierstufe 19 aufweist. Angemerkt wird auch, dass die Umpackstation(en) 18 mit der Bypass-Bahn 17a und die Sortierstufe 19 mit der Bypass-Bahn 17b auch umgangen werden können, sofern kein Umpacken der Auftrags-Waren auf Ladehilfsmittel respektive eine Sortierung des vom dynamischen Puffer 5 abgehenden Förderstroms nötig ist.

Generell wird die Auftrags-Ware bei den vorgestellten Warenlagersystemen la..lg zu einem Versandbehälter zugeordnet. Diese Zuordnung kann in unterschiedlicher Weise erfolgen.

Beispielsweise kann die Zuordnung einer Auftrags-Ware zu einem Versandbehälter vor dem Zwischenspeichern der Auftrags-Ware im dynamischen Puffer 5, 5a, 5b erfolgen. Dadurch läuft der Kommissioniervorgang vergleichsweise deterministisch ab. Beispielsweise kann eine Zuordnung einer Auftrags-Ware zu einem bestimmten Versandbehälter schon beim Auslagern (oder auch davor) erfolgen. Der Kommissioniervorgang ist daher gut planbar.

Denkbar ist aber auch, dass die Zuordnung einer Auftrags-Ware zu einem Versandbehälter vor dem Abtransport der Auftrags-Waren aus dem dynamischen Puffer 5, 5a, 5b erfolgt. Dadurch erfolgt der dem dynamischen Puffer nachgelagerte Teil des Kommissionierverfahrens und zumindest teilweise auch der im dynamischen Puffer 5, 5a, 5b ablaufende Teil des Kommissionierverfahrens auf relativ deterministische Weise. Diese Teile des Kommissioniervorgangs sind daher gut planbar. Insbesondere erfolgt die Zuordnung einer Auftrags-Ware zu einem Versandbehälter während der Zwischenspeicherung der Auftrags-Ware im dynamischen Puffer 5, 5a, 5b.

Schließlich ist auch vorstellbar, dass die Zuordnung einer Auftrags-Ware zu einem Versandbehälter nach dem Abtransport der Auftrags-Waren aus dem dynamischen Puffer 5, 5a, 5b erfolgt. Der Kommissioniervorgang ist daher besonders flexibel, da die Zuordnung einer Auftrags-Ware zu einem bestimmten Versandbehälter vergleichsweise spät erfolgt und daher auch noch vergleichsweise spät korrigierend in den Kommissioniervorgang eingegriffen werden kann.

Der Vollständigkeit halber wird auch angemerkt, dass vor einer Gruppierung der Auftrags-Waren nach Versandbehältern die Zuordnung einer Auftrags-Ware zu je einem Versandbehälter bereits erfolgt ist.

Generell ermöglichen die vorgeschlagenen Maßnahmen das Vorsehen nur vergleichsweise kleiner dynamischen Puffer 5, 5a, 5b. Damit einhergehend können auch mit dem dynamischen Puffer 5, 5a, 5b verbundene Sortiereinrichtungen (zum Beispiel ein mit dem dynamischen Puffer 5, 5a, 5b verbundener Vorsortier-Puffer 15, 15a, 15b oder eine dem dynamischen Puffer 5, 5a, 5b nachgelagerte Sortierstufe 19) vergleichsweise klein gehalten werden. Dies führt dazu, dass die dynamischen Puffer 5, 5a, 5b sowie optional vorhandene Sortiereinrichtungen vergleichsweise gut in den Aufbau eines Warenlagersystems 1 integriert werden können.

Um die Verweildauer der Auftrags-Waren im dynamischen Puffer 5, 5a, 5b besonders kurz zu halten, wodurch dieser besonders klein ausgeführt werden kann, sowie für besonders große Kommissionierleistung des Warenlagersystems la..lg können noch weitere Maßnahmen getroffen werden. Beispielsweise kann eine Wahrscheinlichkeit und/oder eine benötigte Zeit für die Bildung eines verpackungsfertigen Teils für verschiedene Kombinationen an Auftrags-Waren vorausberechnet werden, und es werden jene Auftrags-Waren zuerst zu dem dynamischen Puffer 5, 5a, 5b antransportiert, für welche die Bildung eines verpackungsfertigen Teils am wahrscheinlichsten ist und/oder am wenigsten Zeit benötigt.

Weiterhin ist denkbar, dass für die Qualifizierung von Auftrags-Waren als verpackungsfertiger Teil zusätzlich überprüft wird, ob eine oder mehrere der Bedingungen zutreffend ist/sind:

　　I) für die Auftrags-Waren des verpackungsfertigten Teils liegt eine höhere zeitliche Priorisierung vor als für andere Auftrags-Waren eines anderen verpackungsfertigen Teils und/oder

II) die Größe des verpackungsfertigen Teils ist größer ist als ein anderer verpackungsfertiger Teil und/oder

III) eine Gruppierung auf Basis eines Auftrags / von Versandbehältern / von Waren-Gruppen ist bereits erfolgt.

Es werden also zusätzliche Bedingungen für den Abtransport des verpackungsfertigen Teils der Auftrags-Waren aus dem dynamischen Puffer 5, 5a, 5b und für den Transport zum Kommissionierarbeitsplatz 10 hin geprüft. Im Fall I) werden dringende Aufträge bevorzugt abgearbeitet. Im Fall II) wird dafür Sorge getragen, dass der dynamische Puffer 5, 5a, 5b möglichst stark entleert wird. Im Fall III) wird schließlich darauf geachtet, dass eine Gruppierung, welche unter Umständen für die nachfolgende Verpackung der Auftrags-Waren erforderlich ist, bereits erfolgt ist und nicht noch hergestellt werden muss, beispielsweise mittels eines Durchlaufs des Vorsortier-Puffers 15, 15a, 15b.

Abschließend wird noch angemerkt, dass das Lager 2, wie bereits erwähnt, automatisiert oder manuell betrieben werden kann. Ebenso können die Komissionierarbeitsplätze 10 und/oder Umpackstationen 18 manuell betrieben werden, so wie dies in den Figuren symbolisch angedeutet ist, oder automatisch. In diesem Fall wird das Umpacken der Auftrags-Waren auf Ladehilfsmittel und/oder das Einpacken der Auftrags-Waren in Versandbehälter von Robotern erledigt.

Abschließend wird auch festgehalten, dass der Schutzbereich durch die Patentansprüche bestimmt ist. Die Beschreibung und die Zeichnungen sind jedoch zur Auslegung der Ansprüche heranzuziehen. Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein. In diesem Zusammenhang wird insbesondere angemerkt, dass in den Figuren 5 bis 8 aus Gründen der besseren Übersichtlichkeit kein Auftrags-Rechner 13 dargestellt ist. In der Realität kann dieser aber natürlich auch in den in den Figuren 5 bis 8 dargestellten Warenlagersystemen 1d..1g vorhanden sein.

**Bezugszeichenaufstellung**

| 1a..1g | Warenlagersystem |
|---|---|
| 2 | Lager |
| 3 | Waren-Manipulator |
| 4 | Lagerregal |
| 5, 5a, 5b | dynamischer Puffer |
| 6 | Zuförderstrecke |
| 7 | Abförderstrecke |
| 8 | Pufferbahn |
| 9 | Rückführbahn |
| 10 | Kommissionierarbeitsplatz |
| 11 | Fördereinrichtung |
| 12 | Fördereinrichtung |
| 13 | Auftrags-Rechner |
| 14, 14a, 14b | Puffer-Steuerrechner |
| 15, 15a, 15b | Vorsortier-Puffer |
| 16 | Rückführbahn |
| 17a, 17b | Bypass-Bahn |
| 18 | Umpackstation |
| 19 | Sortierstufe |

**Patentansprüche**

1. Verfahren zum Kommissionieren von Auftrags-Waren, welche einem Auftrag von mehreren Aufträgen zugeordnet sind, wobei der Auftrag mehrere Versandbehälter umfasst, aufweisend die Schritte:

- Erfassen des genannten Auftrags,
- Auslagern von dem Auftrag zugeordneten Auftrags-Waren aus einem Lager (2),
- Antransport der Auftrags-Waren in einen dynamischen Puffer (5, 5a, 5b), welcher eine Zuförderstrecke (6) und eine Abförderstrecke (7), mehrere zwischen der Zuförderstrecke (6) und der Abförderstrecke (7) angeordnete Pufferbahnen (8) sowie zumindest eine zwischen der Abförderstrecke (7) und der Zuförderstrecke (6) angeordnete Rückführbahn (9) aufweist,
- Zwischenspeichern der Auftrags-Waren in wenigstens einer Pufferbahn (8) des dynamischen Puffers (5, 5a, 5b),
- Abtransport der Auftrags-Waren aus dem dynamischen Puffer (5, 5a, 5b) über dessen Abförderstrecke (7) sowie Transportieren der Auftrags-Waren zu einem Kommissionierarbeitsplatz (10) und
- Befüllen eines am Kommissionierarbeitsplatz (10) bereitgestellten Versandbehälters mit Auftrags-Waren,
**dadurch gekennzeichnet, dass**
- geprüft wird, ob ein Teil der im dynamischen Puffer (5, 5a, 5b) vorrätigen Auftrags-Waren verpackungsfertig ist, das heißt für die Befüllung einer vorgebbaren Anzahl von Versandbehältern aus der Gesamtanzahl an Versandbehältern, die zur Erfüllung des Auftrags notwendig sind, ausreicht, und
- der verpackungsfertige Teil der Auftrags-Waren aus dem dynamischen Puffer (5, 5a, 5b) abtransportiert, zum Kommissionierarbeitsplatz (10) hin transportiert und dort in die vorgegebene Anzahl von Versandbehältern transferiert wird, wobei
- die vorgegebene Anzahl an Versandbehältern kleiner ist als die zur Erfüllung des Auftrags notwendige Gesamtanzahl an Versandbehältern.

2. Verfahren nach Anspruch 1, **dadurch gekennzeichnet, dass** die vorgegebene Anzahl an Versandbehältern genau Eins ist.

3. Verfahren nach Anspruch 1, **dadurch gekennzeichnet, dass** die vorgegebene Anzahl an Versandbehältern größer als Eins ist.

4. Verfahren nach einem der Ansprüche 1 bis 3, **dadurch gekennzeichnet, dass**

   - die Auftrags-Waren im dynamischen Puffer (5, 5a, 5b) in Ladehilfsmitteln zwischengespeichert werden und
   - in einem Ladehilfsmittel genau eine Auftrags-Ware enthalten ist.

5. Verfahren nach einem der Ansprüche 1 bis 3, **dadurch gekennzeichnet, dass**

   - die Auftrags-Waren im dynamischen Puffer (5, 5a, 5b) in Ladehilfsmitteln zwischengespeichert werden und
   - in einem Ladehilfsmittel mehr als eine Auftrags-Ware enthalten ist.

6. Verfahren nach einem der Ansprüche 1 bis 5, **dadurch gekennzeichnet, dass**

   - die Auftrags-Waren anhand ihrer Eigenschaften zumindest einer Waren-Gruppe zugeordnet werden und
   - ein Versandbehälter nur mit Auftrags-Waren einer einzigen Waren-Gruppe befüllt wird.

7. Verfahren nach einem der Ansprüche 1 bis 5, **dadurch gekennzeichnet, dass**

   - die Auftrags-Waren anhand ihrer Eigenschaften zumindest einer Waren-Gruppe zugeordnet werden und
   - ein Versandbehälter mit Auftrags-Waren mehrerer Waren-Gruppen befüllt wird.

8. Verfahren nach Anspruch 6 oder 7, **dadurch gekennzeichnet, dass** die Auftrags-Waren Kleidungsstücke umfassen und die Eigenschaften zur Bildung einer Waren-Gruppe eine Farbe des Kleidungsstücks und/oder eine Art des Kleidungsstücks und/oder eine Größe des Kleidungsstücks betreffen.

9. Verfahren nach einem der Ansprüche 1 bis 8, **dadurch gekennzeichnet, dass** die Zuordnung einer Auftrags-Ware zu einem Versandbehälter vor dem Zwischenspeichern der Auftrags-Waren im dynamischen Puffer (5, 5a, 5b) erfolgt.

10. Verfahren nach einem der Ansprüche 1 bis 8, **dadurch gekennzeichnet, dass** die Zuordnung einer Auftrags-Ware zu einem Versandbehälter vor dem Abtransport der Auftrags-Waren aus dem dynamischen Puffer (5, 5a, 5b) erfolgt.

11. Verfahren nach einem der Ansprüche 1 bis 8, **dadurch gekennzeichnet, dass** die Zuordnung einer Auftrags-Ware zu einem Versandbehälter nach dem Abtransport der Auftrags-Waren aus dem dynamischen Puffer (5, 5a, 5b) erfolgt.

12. Verfahren nach einem der Ansprüche 1 bis 11, **dadurch gekennzeichnet, dass**

   - die dem Auftrag zugeordneten Auftrags-Waren unsortiert zu dem dynamischen Puffer (5, 5a, 5b) antransportiert und in der wenigstens einen Pufferbahn (8) des dynamischen Puffers (5, 5a, 5b) zwischengespeichert werden und
   - die Auftrags-Waren nach dem Abtransport aus dem dynamischen Puffer (5, 5a, 5b) und vor dem Eintreffen am Kommissionierarbeitsplatz (10) eine Sortierstufe (19) durchlaufen, in dem eine am Kommissionierarbeitsplatz (10) gewünschte Reihenfolge der Auftrags-Waren hergestellt wird.

13. Verfahren nach einem der Ansprüche 1 bis 11, **dadurch gekennzeichnet, dass** die dem Auftrag zugeordneten Auftrags-Waren in einer am Kommissionierarbeitsplatz (10) gewünschten Reihenfolge sortiert zu dem dynamischen Puffer (5, 5a, 5b) antransportiert und in der wenigstens einen Pufferbahn (8) des dynamischen Puffers (5, 5a, 5b) zwischengespeichert werden.

14. Verfahren nach einem der Ansprüche 1 bis 13, **dadurch gekennzeichnet, dass**

   a) je eine Auftrags-Ware je einem Auftrag zugeordnet ist, wobei

      - die Auftrags-Waren mehrerer Aufträge untereinander vermischt zu dem dynamischen Puffer (5, 5a, 5b) antransportiert und in der wenigstens einen Pufferbahn (8) des dynamischen Puffers (5, 5a, 5b) zwischengespeichert werden und
      - die Auftrags-Waren mehrerer Aufträge vom dynamischen Puffer (5, 5a, 5b) in einen mit dem dynamischen Puffer (5, 5a, 5b) verbundenen Vorsortier-Puffer (15, 15a, 15b) transportiert und dort auf Basis der Aufträge gruppiert werden oder

b) je eine Auftrags-Ware je einem Versandbehälter zugeordnet ist, wobei

- die Auftrags-Waren mehrerer Versandbehälter untereinander vermischt zu dem dynamischen Puffer (5, 5a, 5b) antransportiert und in der wenigstens einen Pufferbahn (8) des dynamischen Puffers (5, 5a, 5b) zwischengespeichert werden und
- die Auftrags-Waren mehrerer Versandbehälter vom dynamischen Puffer (5, 5a, 5b) in einen mit dem dynamischen Puffer (5, 5a, 5b) verbundenen Vorsortier-Puffer (15, 15a, 15b) transportiert und dort auf Basis der Versandbehälter gruppiert werden oder

c) eine Auftrags-Ware einer Waren-Gruppe zugeordnet ist, wobei

- die Auftrags-Waren mehrerer Waren-Gruppen untereinander vermischt zu dem dynamischen Puffer (5, 5a, 5b) antransportiert und in der wenigstens einen Pufferbahn (8) des dynamischen Puffers (5, 5a, 5b) zwischengespeichert werden und
- die Auftrags-Waren mehrerer Waren-Gruppen vom dynamischen Puffer (5, 5a, 5b) in einen mit dem dynamischen Puffer (5, 5a, 5b) verbundenen Vorsortier-Puffer (15, 15a, 15b) transportiert und dort auf Basis der Waren-Gruppen gruppiert werden.

15. Verfahren nach einem der Ansprüche 1 bis 13, **dadurch gekennzeichnet, dass**

a) je eine Auftrags-Ware je einem Auftrag zugeordnet ist und die Auftrags-Waren mehrerer Aufträge gruppiert nach Aufträgen zu dem dynamischen Puffer (5, 5a, 5b) antransportiert und in der wenigstens einen Pufferbahn (8) des dynamischen Puffers (5, 5a, 5b) zwischengespeichert werden oder
b) je eine Auftrags-Ware je einem Versandbehälter zugeordnet ist und die Auftrags-Waren mehrerer Versandbehälter gruppiert nach Versandbehältern zu dem dynamischen Puffer (5, 5a, 5b) antransportiert und in der wenigstens einen Pufferbahn (8) des dynamischen Puffers (5, 5a, 5b) zwischengespeichert werden oder
c) eine Auftrags-Ware einer Waren-Gruppe zugeordnet ist, wobei Auftrags-Waren mehrerer Waren-Gruppen gruppiert nach Waren-Gruppen zu dem dynamischen Puffer (5, 5a, 5b) antransportiert und in der wenigstens einen Pufferbahn (8) des dynamischen Puffers (5, 5a, 5b) zwischengespeichert werden.

16. Verfahren nach Anspruch 14 oder 15, **dadurch gekennzeichnet, dass**

i) für Auftrags-Waren eine Kombination der Fälle a) und b) vorliegt und innerhalb der Gruppierung auf Basis der Aufträge eine Gruppierung auf Basis der Versandbehälter erfolgt oder
ii) für Auftrags-Waren eine Kombination der Fälle a) und c) vorliegt und innerhalb der Gruppierung auf Basis der Aufträge eine Gruppierung auf Basis der Waren-Gruppen erfolgt oder
iii) für Auftrags-Waren eine Kombination der Fälle b) und c) vorliegt und innerhalb der Gruppierung auf Basis der Versandbehälter eine Gruppierung auf Basis der Waren-Gruppen erfolgt oder umgekehrt oder
iv) für Auftrags-Waren eine Kombination der Fälle a) und b) und c) vorliegt und innerhalb der Gruppierung auf Basis der Aufträge eine Gruppierung auf Basis der Versandbehälter und innerhalb der Gruppierung auf Basis der Versandbehälter eine Gruppierung auf Basis der Waren-Gruppen erfolgt oder
v) für Auftrags-Waren eine Kombination der Fälle a) und b) und c) vorliegt und innerhalb der Gruppierung auf Basis der Aufträge eine Gruppierung auf Basis der Waren-Gruppen und innerhalb der Gruppierung auf Basis der Waren-Gruppen eine Gruppierung auf Basis der Versandbehälter erfolgt.

17. Verfahren nach einem der Ansprüche 1 bis 16, **dadurch gekennzeichnet, dass** eine Wahrscheinlichkeit und/oder eine benötigte Zeit für die Bildung eines verpackungsfertigen Teils für verschiedene Kombinationen an Auftrags-Waren vorausberechnet wird und jene Auftrags-Waren zuerst zu dem dynamischen Puffer (5, 5a, 5b) antransportiert werden, für welche die Bildung eines verpackungsfertigen Teils am wahrscheinlichsten ist und/oder am wenigsten Zeit benötigt.

18. Verfahren nach einem der Ansprüche 1 bis 17, **dadurch gekennzeichnet, dass** weitere Waren, die sich in der Pufferbahn (8), in welcher der verpackungsfertige Teil der Auftrags-Waren zwischengespeichert ist, zwischen den Auftrags-Waren des verpackungsfertigen Teils befinden, beim Abtransport des verpackungsfertigen Teils aus dem dynamischen Puffer (5, 5a, 5b) über die Rückführbahn (9) in den dynamischen Puffer (5, 5a, 5b) rückgeführt werden.

19. Verfahren nach einem der Ansprüche 1 bis 18, **dadurch gekennzeichnet, dass** für die Qualifizierung von Auftrags-Waren als verpackungsfertiger Teil zusätzlich überprüft wird, ob eine oder mehrere der Bedingungen

    I) für die Auftrags-Waren des verpackungsfertigten Teils liegt eine höhere zeitliche Priorisierung vor als für andere Auftrags-Waren eines anderen verpackungsfertigten Teils und/oder
    II) die Größe des verpackungsfertigten Teils ist größer ist als ein anderer verpackungsfertiger Teil und/oder
    III) eine Gruppierung auf Basis eines Auftrags / von Versandbehältern / von Waren-Gruppen ist bereits erfolgt
    zutreffend ist.

20. Verfahren nach einem der Ansprüche 1 bis 19, **dadurch gekennzeichnet, dass** die Auftrags-Waren nach dem Auslagern aus dem Lager (2) und vor dem Antransport zu dem dynamischen Puffer (5, 5a, 5b) in Ladehilfsmittel umgepackt werden.

21. Warenlagersystem (la..lg) zum Kommissionieren von Auftrags-Waren, welche zumindest einem mehrere Versandbehälter umfassenden Auftrag zugeordnet sind, aufweisend:

    - ein Lager (2), in dem die Auftrags-Waren lagerbar sind,
    - einen dynamischen Puffer (5, 5a, 5b), welcher eine Zuförderstrecke (6) und eine Abförderstrecke (7), mehrere zwischen der Zuförderstrecke (6) und der Abförderstrecke (7) angeordnete Pufferbahnen (8) sowie zumindest eine zwischen der Abförderstrecke (7) und der Zuförderstrecke (6) angeordnete Rückführbahn (9) aufweist,
    - einen Kommissionierarbeitsplatz (10) zum Befüllen eines am Kommissionierarbeitsplatz (10) bereitgestellten Versandbehälters mit Auftrags-Waren,
    - eine Fördereinrichtung (11, 12), welche für den Transport von Auftrags-Waren zum dynamischen Puffer (5, 5a, 5b) hin und vom dynamischen Puffer (5, 5a, 5b) zum Kommissionierarbeitsplatz (10) eingerichtet ist, und
    - einen Auftrags-Rechner (13), welcher zur Erfassung eines Auftrags ausgebildet ist,
    **gekennzeichnet durch**
    - einen Puffer-Steuerrechner (14, 14a, 14b), welcher für die Überprüfung ausgebildet ist, ob ein Teil der im dynamischen Puffer (5, 5a, 5b) vorrätigen Auftrags-Waren, welche dem Auftrag zugeordnet sind, verpackungsfertig ist, das heißt für die Befüllung einer vorgebbaren Anzahl von Versandbehältern aus der Gesamtanzahl an Versandbehältern, die zur Erfüllung des Auftrags notwendig sind, ausreicht, und

    - welcher weiter dazu ausgebildet ist, den Abtransport dieses verpackungsfertigen Teils an Auftrags-Waren aus dem dynamischen Puffer (5, 5a, 5b) und den Transport zum Kommissionierarbeitsplatz (10) hin auszulösen, wobei
    - die vorgegebene Anzahl von Versandbehältern kleiner ist als die zur Erfüllung des Auftrags notwendige Gesamtanzahl an Versandbehältern.

22. Warenlagersystem (1a.. 1g) nach Anspruch 21, **gekennzeichnet durch** einen mit dem dynamischen Puffer (5, 5a, 5b) verbundenen Vorsortier-Puffer (15, 15a, 15b), welcher mehrere Rückführbahnen (16) aufweist, und der dazu eingerichtet ist, Auftrags-Waren mehrerer Aufträge/Versandbehälter/Waren-Gruppen auf Basis der Aufträge/Versandbehälter/Waren-Gruppen zu gruppieren.

23. Warenlagersystem (1a..1g) nach Anspruch 22, **dadurch gekennzeichnet, dass** einem dynamischen Puffer (5, 5a, 5b) genau ein Vorsortier-Puffer (15, 15a, 15b) zugeordnet ist.

24. Warenlagersystem (la..lg) nach Anspruch 22, **dadurch gekennzeichnet, dass** einem dynamischen Puffer (5, 5a, 5b) mehrere Vorsortier-Puffer (15, 15a, 15b) zugeordnet sind.

25. Warenlagersystem (la..lg) nach Anspruch 22, **dadurch gekennzeichnet, dass** ein Vorsortier-Puffer (15, 15a, 15b) mehreren dynamischen Puffern (5, 5a, 5b) zugeordnet ist.

26. Warenlagersystem (1a..1g) nach einem der Ansprüche 22 bis 25, **dadurch gekennzeichnet, dass** ein Verhältnis zwischen einer im Warenlagersystem (1a..1g) vorgesehenen Gesamtanzahl $n_1$ an Rückführbahnen (16) des zumindest einen Vorsortier-Puffers (15, 15a, 15b) und einer im Warenlagersystem (la..lg) vorgesehenen Gesamtanzahl $n_2$ an Pufferbahnen (8) des zumindest einen dynamischen Puffers (5, 5a, 5b)

$$\frac{n_1}{n_2} = \frac{ta \cdot p \cdot m_1 \cdot f \cdot c_2 \cdot x}{c_1 \cdot b}$$

beträgt, wobei

    - ta eine von einer Auftrags-Ware vom dynamischen Puffer (5, 5a, 5b) zum Vorsortier-Puffer (15, 15a, 15b) durchschnittlich benötigte Transportzeit,
    - p eine vom Vorsortierpuffer (15, 15a, 15b) je Zeiteinheit bereitzustellende Anzahl an Auftrags-Waren,
    - $c_1$ eine in einer Rückführbahn (16) des Vorsortier-Puffers (15, 15a, 15b) speicherbare Anzahl an Auftrags-Waren,

- $m_1$ eine Gesamtzahl der vom Warenlagersystem (1a.. 1g) umfassten Vorsortier-Puffer (15, 15a, 15b),

- b eine gleichzeitig im dynamischen Puffer (5, 5a, 5b) zwischenspeicherbare Anzahl an Auftrags-Waren,

- f ein durchschnittlicher Füllgrad der Pufferbahnen (8) des dynamischen Puffers (5, 5a, 5b) und

- $c_2$ eine in einer Pufferbahn (8) des dynamischen Puffers (5, 5a, 5b) speicherbare Anzahl an Auftrags-Waren ist und

- für x ein Wert von 1,5 gewählt wird, wenn die letzte einen Ausgang des dynamischen Puffers (5, 5a, 5b) passierende Auftrags-Ware des Auftrags die Auslagerung weiterer Auftrags-Waren auslöst, und für x ein Wert von 2,0 gewählt wird, wenn die letzte einen Eingang des Vorsortier-Puffers (15, 15a, 15b) passierende Auftrags-Ware des Auftrags die Auslagerung weiterer Auftrags-Waren auslöst, und ansonsten ein dazwischen liegender Wert gewählt wird.

27. Warenlagersystem (1a.. 1g) nach einem der Ansprüche 21 bis 26, **dadurch gekennzeichnet, dass** zwischen dem dynamischen Puffer (5, 5a, 5b) und dem Kommissionierarbeitsplatz (10) eine Sortierstufe (19) vorgesehen ist, die dazu eingerichtet ist, eine am Kommissionierarbeitsplatz (10) gewünschte Reihenfolge der Auftrags-Waren herzustellen.

**Claims**

1. A method for picking order goods which are allocated to an order of a plurality of orders, wherein the order comprises a plurality of shipping containers, comprising the steps:

    - acquisition of said order,
    - removal of the order goods allocated to the order from a store (2),
    - transport of the order goods to a dynamic buffer (5, 5a, 5b) having an infeed line (6) and an outfeed line (7), a plurality of buffer lanes (8) arranged between the infeed line (6) and the outfeed line (7), as well as at least one return lane (9) arranged between the outfeed line (7) and the infeed line (6),
    - temporary storage of the order goods in at least one buffer lane (8) of the dynamic buffer (5, 5a, 5b),
    - discharge of the order goods from the dynamic buffer (5, 5a, 5b) via its outfeed line (7) as well as transport of the order goods to a picking workstation (10) and
    - filling of a shipping container provisioned at the picking workstation (10) with order goods, **characterized in that**

    - it is checked whether a portion of the order goods available in the dynamic buffer (5, 5a, 5b) is ready for packing, i.e. is sufficient to fill a predefinable number of shipping containers out of the total number of shipping containers necessary to fulfill the order, and
    - the portion of the order goods ready for packing is discharged from the dynamic buffer (5, 5a, 5b), transported to the picking workstation (10) and transferred, there, into the predefined number of shipping containers, wherein
    - the predefined number of shipping containers is smaller than the total number of shipping containers necessary to fulfill the order.

2. The method according to claim 1, **characterized in that** the predefined number of shipping containers is exactly one.

3. The method according to claim 1, **characterized in that** the predefined number of shipping containers is larger than one.

4. The method according to one of claims 1 to 3, **characterized in that**

    - the order goods in the dynamic buffer (5, 5a, 5b) are stored temporarily in loading aids and
    - a loading aid contains exactly one order good.

5. The method according to one of claims 1 to 3, **characterized in that**

    - the order goods in the dynamic buffer (5, 5a, 5b) are stored temporarily in loading aids and
    - a loading aid contains more than one order good.

6. The method according to one of claims 1 to 5, **characterized in that**

    - the order goods are allocated to at least one class of goods on the basis of their properties and
    - a shipping container is filled with order goods of only one single class of goods.

7. The method according to one of claims 1 to 5, **characterized in that**

    - the order goods are allocated to at least one class of goods on the basis of their properties and
    - a shipping container is filled with order goods of a plurality of classes of goods.

8. The method according to claim 6 or 7, **characterized in that** the order goods comprise items of clothing and the properties for forming a class of goods relate to a color of the item of clothing and/or a kind of the item of clothing and/or a size of the item of clothing.

9. The method according to one of claims 1 to 8, **characterized in that** the allocation of an order good to a shipping container is done before the temporary storing of the order good in the dynamic buffer (5, 5a, 5b).

10. The method according to one of claims 1 to 8, **characterized in that** the allocation of an order good to a shipping container is done before the discharge of the order goods from the dynamic buffer (5, 5a, 5b).

11. The method according to one of claims 1 to 8, **characterized in that** the allocation of an order good to a shipping container is done after the discharge of the order goods from the dynamic buffer (5, 5a, 5b).

12. The method according to one of claims 1 to 11, **characterized in that**

    - the order goods allocated to the order are transported to the dynamic buffer (5, 5a, 5b) unsorted and are stored temporarily in the at least one buffer lane (8) of the dynamic buffer (5, 5a, 5b) and
    - the order goods pass through a sorting stage (19) after the discharge from the dynamic buffer (5, 5a, 5b) and before the arrival at the picking workstation (10), in which a sequence of the order goods as desired at the picking workstation (10) is created.

13. The method according to one of claims 1 to 11, **characterized in that** the order goods allocated to the order are transported to the dynamic buffer (5, 5a, 5b) sorted in a sequence as desired at the picking workstation (10) and stored temporarily in the at least one buffer lane (8) of the dynamic buffer (5, 5a, 5b).

14. The method according to one of claims 1 to 13, **characterized in that**

    a) one order good each is allocated to one order each, wherein

      - the order goods of a plurality of orders are transported to the dynamic buffer (5, 5a, 5b) intermixed and are stored temporarily in the at least one buffer lane (8) of the dynamic buffer (5, 5a, 5b) and
      - the order goods of a plurality of orders are transported from the dynamic buffer (5, 5a, 5b) into a presorting buffer (15, 15a, 15b) connected to the dynamic buffer (5, 5a, 5b) and grouped there on the basis of the orders or

    b) one order good each is allocated to one shipping container each, wherein

      - the order goods of a plurality of shipping containers are transported to the dynamic buffer (5, 5a, 5b) intermixed and are stored temporarily in the at least one buffer lane (8) of the dynamic buffer (5, 5a, 5b) and
      - the order goods of a plurality of shipping containers are transported from the dynamic buffer (5, 5a, 5b) into a presorting buffer (15, 15a, 15b) connected to the dynamic buffer (5, 5a, 5b) and grouped there on the basis of the shipping containers or

    c) one order good is allocated to one class of goods, wherein

      - the order goods of a plurality of classes of goods are transported to the dynamic buffer (5, 5a, 5b) intermixed and are stored temporarily in the at least one buffer lane (8) of the dynamic buffer (5, 5a, 5b) and
      - the order goods of a plurality of classes of goods are transported from the dynamic buffer (5, 5a, 5b) into a presorting buffer (15, 15a, 15b) connected to the dynamic buffer (5, 5a, 5b) and grouped there on the basis of the classes of goods.

15. The method according to one of claims 1 to 13, **characterized in that**

    a) one order good each is allocated to one order each and the order goods of a plurality of orders are transported to the dynamic buffer (5, 5a, 5b) grouped according to orders and are stored temporarily in the at least one buffer lane (8) of the dynamic buffer (5, 5a, 5b) or
    b) one order good each is allocated to one shipping container each and the order goods of a plurality of shipping containers are transported to the dynamic buffer (5, 5a, 5b) grouped according to shipping containers and are stored temporarily in the at least one buffer lane (8) of the dynamic buffer (5, 5a, 5b) or
    c) one order good is allocated to one class of goods, wherein order goods of a plurality of classes of goods are transported to the dynamic buffer (5, 5a, 5b) grouped according to classes of goods and are stored temporarily in the at least one buffer lane (8) of the dynamic buffer (5, 5a, 5b).

**16.** The method according to claim 14 or 15, **characterized in that**

  i) for order goods there is a combination of the cases a) and b) and a grouping is done on the basis of the shipping containers within the grouping on the basis of the orders or
  ii) for order goods there is a combination of the cases a) and c) and a grouping is done on the basis of the classes of goods within the grouping on the basis of the orders
  or
  iii) for order goods there is a combination of the cases b) and c) and a grouping is done on the basis of the classes of goods within the grouping on the basis of the shipping containers or vice versa or
  iv) for order goods there is a combination of the cases a) and b) and c) and a grouping is done on the basis of the shipping containers within the grouping on the basis of the orders and a grouping is done on the basis of the classes of goods within the grouping on the basis of the shipping containers or
  v) for order goods there is a combination of the cases a) and b) and c) and a grouping is done on the basis of the classes of goods within the grouping on the basis of the orders and a grouping is done on the basis of the shipping containers within the grouping on the basis of the classes of goods.

**17.** The method according to one of claims 1 to 16, **characterized in that** a probability and/or a time needed for forming a portion ready for packing is precalculated for different combinations of order goods, and those order goods are transported to the dynamic buffer (5, 5a, 5b) first, for which the formation of a portion ready for packing is most probable and/or needs the least amount of time.

**18.** The method according to one of claims 1 to 17, **characterized in that** further goods, which are located between the order goods of the portion ready for packing in the buffer lane (8), in which buffer lane (8) the portion of the order goods ready for packing is stored temporarily, are returned, via the return lane (9) to the dynamic buffer (5, 5a, 5b), upon the discharge of the portion ready for packing from the dynamic buffer (5, 5a, 5b).

**19.** The method according to one of claims 1 to 18, **characterized in that** for the qualification of order goods as a portion ready for packing it is checked additionally whether one or a plurality of the following conditions applies:

  I) the order goods of the portion ready for packing have a higher priority with regard to time than other order goods of another portion ready for packing and/or
  II) the size of the portion ready for packing is larger than another portion ready for packing and/or
  III) a grouping on the basis of an order / shipping containers / classes of goods has already been done.

**20.** The method according to any one of the claims 1 to 19, **characterized in that** the order goods are repacked into loading aids after the removal from the store (2) and before the transport to the dynamic buffer (5, 5a, 5b).

**21.** A goods storage system (1a..1g) for picking order goods allocated to at least one order comprising a plurality of shipping containers, having:

  - a store (2) in which the order goods are storable,
  - a dynamic buffer (5, 5a, 5b) having an infeed line (6) and an outfeed line (7), a plurality of buffer lanes (8) arranged between the infeed line (6) and the outfeed line (7) as well as at least one return lane (9) arranged between the outfeed line (7) and the infeed line (6),
  - a picking workstation (10) for filling a shipping container provisioned at the picking workstation (10) with order goods,
  - a conveying device (11, 12) adapted to transport order goods to the dynamic buffer (5, 5a, 5b) and from the dynamic buffer (5, 5a, 5b) to the picking workstation (10) and
  - an order computer (13) configured to acquire an order,
  **characterized by**
  - a buffer-control computer (14, 14a, 14b) configured to check whether a portion of the order goods available in the dynamic buffer (5, 5a, 5b) allocated to the order is ready for packing, i.e. is sufficient to fill a predefinable number of shipping containers out of the total number of shipping containers necessary to fulfill the order, and
  - which is further configured to trigger the discharge of this portion of order goods ready for packing from the dynamic buffer (5, 5a, 5b) and the transport to the picking workstation (10), wherein
  - the predefined number of shipping containers is smaller than the total number of shipping containers necessary to fulfill the order.

**22.** The goods storage system (1a..1g) according to claim 21, **characterized by** a presorting buffer (15, 15a, 15b) connected to the dynamic buffer (5, 5a, 5b), which presorting buffer (15, 15a, 15b) has a plurality of return lanes (16) and is adapted to group order goods of a plurality of orders / shipping containers / classes of goods on the basis of the orders / shipping containers / classes of goods.

23. The goods storage system (1a..1g) according to claim 22, **characterized in that** exactly one presorting buffer (15, 15a, 15b) is allocated to one dynamic buffer (5, 5a, 5b).

24. The goods storage system (1a..1g) according to claim 22, **characterized in that** a plurality of presorting buffers (15, 15a, 15b) is allocated to one dynamic buffer (5, 5a, 5b).

25. The goods storage system (1a..1g) according to claim 22, **characterized in that** one presorting buffer (15, 15a, 15b) is allocated to a plurality of dynamic buffers (5, 5a, 5b).

26. The goods storage system (1a..1g) according to one of claims 22 to 25, **characterized in that** a ratio between a total number $n_1$ of return lanes (16) of the at least one presorting buffer (15, 15a, 15b) provided in the goods storage system (1a..1g) and a total number $n_2$ of buffer lanes (8) of the at least one dynamic buffer (5, 5a, 5b) provided in the goods storage system (1a..1g) is

$$\frac{n_1}{n_2} = \frac{ta \cdot p \cdot m_1 \cdot f \cdot c_2 \cdot x}{c_1 \cdot b}$$

wherein

- ta is a transport time needed on average by an order good to travel from the dynamic buffer (5, 5a, 5b) to the presorting buffer (15, 15a, 15b),
- p is a number of order goods to be provisioned by the presorting buffer (15, 15a, 15b) per unit of time,
- $c_1$ s a number of order goods storable in a return lane (16) of the presorting buffer (15, 15a, 15b),
- $m_1$ is a total number of the presorting buffers (15, 15a, 15b) comprised by the goods storage system (1a..1g),
- b is a number of order goods storable temporarily in the dynamic buffer (5, 5a, 5b) at the same time,
- f is an average filling ratio of the buffer lanes (8) of the dynamic buffer (5, 5a, 5b) and
- $c_2$ is a number of order goods storable in a buffer lane (8) of the dynamic buffer (5, 5a, 5b) and
- a value of 1.5 is selected for x if the last order good of the order passing an exit of the dynamic buffer (5, 5a, 5b) triggers the removal of further order goods, and a value of 2.0 is selected for x if the last order good of the order passing an entry of the presorting buffer (15, 15a, 15b) triggers the removal of further order goods, and otherwise a value therebetween is selected.

27. The goods storage system (1a..1g) according to one of claims 21 to 26, **characterized in that** a sorting stage (19) is provided between the dynamic buffer (5, 5a, 5b) and the picking workstation (10), which sorting stage (19) is adapted to create a sequence of the order goods as desired at the picking workstation (10).

**Revendications**

1. Procédé pour la préparation d'articles commandés, qui correspondent à une commande de plusieurs commandes, dans lequel la commande comprend plusieurs récipients d'expédition, comprenant les étapes suivantes :

- saisie de la demande mentionnée,
- déstockage des articles sur commande correspondant à la commande hors d'un entrepôt (2),
- transport des articles commandés vers un tampon dynamique (5, 5a, 5b), qui comprend un trajet d'alimentation (6) et un trajet d'évacuation (7), plusieurs pistes tampons (8) disposées entre le trajet d'alimentation (6) et le trajet d'évacuation (7) ainsi qu'au moins une piste de retour (9) disposée entre le trajet d'évacuation (7) et le trajet d'alimentation (6),
- entreposage des articles commandés dans au moins une piste tampon (8) du tampon dynamique (5, 5a, 5b),
- transport des articles commandés hors du tampon dynamique (5, 5a, 5b) par l'intermédiaire du trajet d'évacuation (7) ainsi que transport des articles commandés vers un poste de travail de préparation de commande (10) et
- remplissage d'un récipient d'expédition mis à disposition au niveau du poste de travail de préparation de commande (10),
**caractérisé en ce que**
- il est vérifié si une partie des articles commandés mis en réserve dans le tampon dynamique (5, 5a, 5b) sont prêts à être emballés, c'est-à-dire qu'ils suffisent pour le remplissage d'un nombre prédéterminé de récipients d'expédition parmi le nombre total de récipients d'expédition, qui sont nécessaires pour l'exécution de la commande et
- la partie des articles commandés prêts à être emballés sont transportés hors du tampon dynamique (5, 5a, 5b), sont transportés vers le poste de travail de préparation de commande (10) et y sont transférés vers le nombre prédéterminé de récipients d'expédition, dans lequel

- le nombre prédéterminé de récipients d'expédition est inférieur au nombre total de récipients d'expédition nécessaire pour l'exécution de la commande.

2. Procédé selon la revendication 1, **caractérisé en ce que** le nombre prédéterminé de récipients d'expédition est exactement égal à un.

3. Procédé selon la revendication 1, **caractérisé en ce que** le nombre prédéterminé de récipients d'expédition est supérieur à un.

4. Procédé selon l'une des revendications 1 à 3, **caractérisé en ce que**

   - les articles commandés dans le tampon dynamique (5, 5a, 5b) sont entreposés dans les moyens de chargement et
   - dans un moyen de chargement est contenu exactement un article commandé.

5. Procédé selon l'une des revendications 1 à 3, **caractérisé en ce que**

   - les articles commandés dans le tampon dynamique (5, 5a, 5b) sont entreposés dans les moyens de chargement et
   - dans un moyen de chargement est contenu plus d'un article commandé.

6. Procédé selon l'une des revendications 1 à 5, **caractérisé en ce que**

   - les articles commandés sont classés en fonction de leurs propriétés d'au moins un groupe d'articles et
   - un récipient d'expédition est rempli uniquement avec des articles commandés d'un seul groupe d'articles.

7. Procédé selon l'une des revendications 1 à 5, **caractérisé en ce que**

   - les articles commandés sont classés en fonction de leurs propriétés d'au moins un groupe d'articles et
   - un récipient d'expédition est rempli avec des articles commandés de plusieurs groupes d'articles.

8. Procédé selon la revendication 6 ou 7, **caractérisé en ce que** les articles commandés comprennent des vêtements et les propriétés pour la formation d'un groupe d'articles concernant une couleur du vêtement et/ou un type de vêtement et/ou une taille du vêtement.

9. Procédé selon l'une des revendications 1 à 8, **caractérisé en ce que** l'attribution d'un article commandé à un récipient d'expédition a lieu avant l'entreposage des articles commandés dans le tampon dynamique (5, 5a, 5b).

10. Procédé selon l'une des revendications 1 à 8, **caractérisé en ce que** l'attribution d'un article commandé à un récipient d'expédition a lieu avant le transport des articles des articles commandés hors du tampon dynamique (5, 5a, 5b).

11. Procédé selon l'une des revendications 1 à 8, **caractérisé en ce que** l'attribution d'un article commandé à un récipient d'expédition a lieu après le transport des articles des articles commandés hors du tampon dynamique (5, 5a, 5b).

12. Procédé selon l'une des revendications 1 à 11, **caractérisé en ce que**

   - les articles commandés correspondant à la commande sont transportés non triés vers le tampon dynamique (5, 5a, 5b) et sont entreposés dans l'au moins une piste tampon (8) du tampon dynamique (5, 5a, 5b) et
   - les articles commandés traversent, après le transport hors du tampon dynamique (5, 5a, 5b) et avant l'arrivée au poste de travail de préparation de commande (10), un étage de tri (19) dans lequel un ordre souhaité d'articles commande est réalisée au niveau du poste de travail de préparation de commande (10).

13. Procédé selon l'une des revendications 1 à 11, **caractérisé en ce que** les articles commandés correspondant à la commande sont transportés triés dans un ordre souhaité au niveau du poste de travail de préparation de commande (10) vers le tampon dynamique (5, 5a, 5b) et sont entreposés dans l'au moins une piste tampon (8) du tampon dynamique (5, 5a, 5b).

14. Procédé selon l'une des revendications 1 à 13, **caractérisé en ce que**

   a) chaque article commandé est attribué à une commande, dans lequel

      - les articles commandés de plusieurs commandés sont transportés de manière mélangée entre eux vers le tampon dynamique (5, 5a, 5b) et sont entreposés dans l'au moins une piste tampon (8) du tampon dynamique (5, 5a, 5b) et
      - les articles commandés de plusieurs commandes sont transportés du tampon dynamique (5, 5a, 5b) vers un tampon de pré-tri (15, 15a, 15b) relié avec le tampon dynamique (5, 5a, 5b) et y sont regroupés selon les commandes ou

b) chaque article commandé est attribué à un récipient d'expédition, dans lequel

- les articles commandés de plusieurs récipients d'expédition sont transportés de manière mélangée entre eux vers le tampon dynamique (5, 5a, 5b) et sont entreposés dans l'au moins une piste tampon (8) du tampon dynamique (5, 5a, 5b) et
- les articles commandés de plusieurs récipients d'expédition sont transportés du tampon dynamique (5, 5a, 5b) vers un tampon de pré-tri (15, 15a, 15b) relié avec le tampon dynamique (5, 5a, 5b) et y sont regroupés selon les récipients d'expédition ou

c) un article commandé est attribué à un groupe d'articles, dans lequel

- les articles commandés de plusieurs groupes d'articles sont transportés de manière mélangée entre eux vers le tampon dynamique (5, 5a, 5b) et sont entreposés dans l'au moins une piste tampon (8) du tampon dynamique (5, 5a, 5b) et
- les articles commandés de plusieurs groupes d'articles sont transportés du tampon dynamique (5, 5a, 5b) vers un tampon de pré-tri (15, 15a, 15b) relié avec le tampon dynamique (5, 5a, 5b) et y sont regroupés selon les groupes d'articles.

**15.** Procédé selon l'une des revendications 1 à 13, **caractérisé en ce que**

a) chaque article commandé est attribué à une commande et les articles commandés de plusieurs commandés sont transportés de manière regroupée selon les commandes vers le tampon dynamique (5, 5a, 5b) et sont entreposés dans l'au moins une piste tampon (8) du tampon dynamique (5, 5a, 5b) ou
b) chaque article commandé est attribué à un récipient d'expédition et les articles commandés de plusieurs récipients d'expédition sont transportés de manière regroupée selon les récipients d'expédition vers le tampon dynamique (5, 5a, 5b) et sont entreposés dans l'au moins une piste tampon (8) du tampon dynamique (5, 5a, 5b) ou
c) chaque article commandé est attribué à un groupe d'articles, dans lequel les articles commandés de plusieurs groupes d'articles sont transportés de manière regroupée selon les groupes d'articles vers le tampon dynamique (5, 5a, 5b) et sont entreposés dans l'au moins une piste tampon (8) du tampon dynamique (5, 5a, 5b).

**16.** Procédé selon la revendication 14 ou 15, **caractérisé en ce que**

i) pour les articles commandés, il existe une combinaison des cas a) et b) et, dans le cadre du regroupement selon les commandes, a lieu un regroupement selon les récipients d'expédition ou
ii) pour les articles commandés, il existe une combinaison des cas a) et c) et, dans le cadre du regroupement selon les commandes, a lieu un regroupement selon les groupes d'articles ou
iii) pour les articles commandés, il existe une combinaison des cas b) et c) et, dans le cadre du regroupement selon les récipients d'expédition, a lieu un regroupement selon les groupes d'articles ou inversement ou
iv) pour les articles commandés, il existe une combinaison des cas a) et b) et c) et, dans le cadre du regroupement selon les commandes, a lieu un regroupement selon les récipients d'expédition et, dans le cadre du regroupement selon les récipients d'expédition, a lieu un regroupement selon les groupes d'articles.
v) pour les articles commandés, il existe une combinaison des cas a) et b) et c) et, dans le cadre du regroupement selon les commandes, a lieu un regroupement selon les groupes d'articles et, dans le cadre du regroupement selon les groupes d'articles, a lieu un regroupement selon les récipients d'expédition.

**17.** Procédé selon l'une des revendications 1 à 16, **caractérisé en ce qu'**une probabilité et/ou un temps nécessaire pour la formation d'une partie prête à l'emballage est calculé à l'avance pour différentes combinaisons d'articles commandés et les articles commandés pour lesquels la formation d'une partie prête à l'emballage est la plus probable et/ou nécessite le moins de temps sont d'abord transportés vers le tampon dynamique (5, 5a, 5b).

**18.** Procédé selon l'une des revendications 1 à 17, **caractérisé en ce que** des articles supplémentaires, qui se trouvent dans la piste tampon (8), dans laquelle la partie prête à l'emballage des articles commandés sont entreposés, entre les articles commandés de la partie prête à l'emballage, sont retournés vers le tampon dynamique (5, 5a, 5b) lors du transport de la partie prête à l'emballage hors du tampon dynamique (5, 5a, 5b) par l'intermédiaire de la piste de retour (9).

**19.** Procédé selon l'une des revendications 1 à 18, **caractérisé en ce que**, pour la qualification d'articles commandés en tant que partie prête à l'emballage, il est en outre vérifié si une ou plusieurs des conditions

I) pour les articles commandés de la partie prête à l'emballage, il existe une priorité temporelle plus élevée que pour d'autres articles commandés d'une autre partie prête à l'emballage et/ou

II) la taille de la partie prête à l'emballage est supérieure à celle d'une autre partie prête à l'emballage et/ou

III) un regroupement a déjà eu lieu selon une commande / des récipients d'expédition / des groupes d'articles

sont satisfaites.

**20.** Procédé selon l'une des revendications 1 à 19, **caractérisé en ce que** les articles commandés sont reconditionnés dans des moyens de chargement après le déstockage hors de l'entrepôt (2) et avant le transport vers le tampon dynamique (5, 5a, 5b).

**21.** Système d'entrepôt (1a... 1g) pour la préparation d'articles commandés, qui correspondent à au moins une commande comprenant plusieurs récipients d'expédition, comprenant :

- un entrepôt (2), dans lequel les articles commandés peuvent être stockés,
- un tampon dynamique (5, 5a, 5b) qui comprend un trajet d'alimentation (6) et un trajet d'évacuation (7), plusieurs pistes tampons (8) disposées entre le trajet d'alimentation (6) et le trajet d'évacuation (7) ainsi qu'au moins une piste de retour (9) disposée entre le trajet d'évacuation (7) et le trajet d'alimentation (6),
- un poste de travail de préparation de commande (10) pour le remplissage d'un récipient d'expédition avec des articles commandés, mis à disposition au niveau du poste de travail de préparation de commande (10),
- un dispositif de convoyage (11, 12) qui est conçu pour le transport d'articles commandés vers le tampon dynamique (5, 5a, 5b) et du tampon dynamique (5, 5a, 5b) vers le poste de travail de préparation de commande (10) et
- un ordinateur de commande (13) qui est conçu pour la saisie d'une commande, **caractérisé par**
- un ordinateur de contrôle du tampon (14, 14a, 14b), qui est conçu pour la vérification si une partie des articles commandés en réserve dans le tampon dynamique (5, 5a, 5b), qui correspondent à la commande, sont prêts à être emballés, c'est-à-dire qui suffisent pour le remplissage d'un nombre prédéterminé de récipients d'expédition parmi le nombre total de récipients d'expédition qui sont nécessaires pour l'exécution de la commande et
- qui est en outre conçu pour déclencher le transport de cette partie d'articles commandés prêts à être emballés hors du tampon dynamique (5, 5a, 5b) et le transport vers le poste de travail de préparation de commande (10), dans lequel
- le nombre prédéterminé de récipients d'expédition est inférieur au nombre total de récipients d'expédition nécessaires pour l'exécution de la commande.

**22.** Système d'entrepôt (1a... 1g) selon la revendication 21, **caractérisé par** un tampon de pré-tri (15, 15a, 15b) relié avec le tampon dynamique (5, 5a, 5b), qui comprend plusieurs pistes de retour (16) et qui est conçu pour regrouper les articles commandés de plusieurs commandes / récipients d'expédition / groupes d'articles selon les commandes / récipients d'expédition / groupes d'articles.

**23.** Système d'entrepôt (1a... 1g) selon la revendication 22, **caractérisé en ce que**, à un tampon dynamique (5, 5a, 5b) correspond exactement un tampon de pré-tri (15, 15a, 15b).

**24.** Système d'entrepôt (1a... 1g) selon la revendication 22, **caractérisé en ce que**, à un tampon dynamique (5, 5a, 5b) correspondent plusieurs tampons de pré-tri (15, 15a, 15b).

**25.** Système d'entrepôt (1a... 1g) selon la revendication 22, **caractérisé en ce qu'**un tampon de pré-tri (15, 15a, 15b) correspond à plusieurs tampons dynamiques (5, 5a, 5b).

**26.** Système d'entrepôt (1a... 1g) selon l'une des revendications 22 à 25, **caractérisé en ce qu'**un rapport entre un nombre total $n_1$ de pistes de retour (16) de l'au moins un tampon de pré-tri (15, 15a, 15b), prévues dans le système d'entrepôt (1a... 1g) et un nombre total $n_2$ de pistes tampons (8) de l'au moins un tampon dynamique (5, 5a, 5b), prévues dans le système d'entrepôt (1a... 1g) est :

$$\frac{n_1}{n_2} = \frac{ta \cdot p \cdot m_1 \cdot f \cdot c_2 \cdot x}{c_1 \cdot b}$$

dans laquelle :

- ta est un temps de transport moyen nécessaire d'un article commandé du tampon dynamique (5, 5a, 5b) vers le tampon de pré-tri (15, 15a, 15b),

- p est un nombre d'articles commandés à mettre à disposition par le tampon de pré-tri (15, 15a, 15b) par unité de temps,
- $c_1$ est un nombre d'articles commandés, pouvant être stockés dans une piste de retour (16) du tampon de pré-tri (15, 15a, 15b),
- $m_1$ est un nombre total de tampons de pré-tri (15, 15a, 15b) compris par le système d'entrepôt (1a... 1g),
- b est un nombre d'articles commandés pouvant être entreposés simultanément dans le tampon dynamique (5, 5a, 5b),
- f est un degré de remplissage moyen des pistes tampons (8) du tampon dynamique (5, 5a, 5b) et
- $c_2$ est un nombre d'articles commandés pouvant être stockés dans une piste tampon (8) du tampon dynamique (5, 5a, 5b) et
- pour x, une valeur de 1,5 est choisie lorsque le dernier article commandé d'une commande, passant par une sortie du tampon dynamique (5, 5a, 5b), déclenche le déstockage d'autres articles commandés et pour x, une valeur de 2,0 est choisie lorsque le dernier article commandé de la commande, passant par une entrée du tampon de pré-tri (15, 15a, 15b) déclenche le déstockage d'autres articles commandés, sinon une valeur située entre les deux est choisie.

27. Système d'entrepôt (1a... 1g) selon l'une des revendications 21 à 26, **caractérisé en ce que**, entre le tampon dynamique (5, 5a, 5b) et le poste de travail de préparation de commande (10), est prévu un étage de tri (19), qui est conçu pour établir un ordre des articles commandés souhaité au niveau du poste de travail de préparation de commande (10).

**Fig. 1**

**Fig. 2**

**Fig. 3**

Fig. 4

Fig. 5

**Fig. 6**

1f

2

11

15

5a

14a

17a

17b

5b

14b

12

10

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2581329 B1
- EP 3090967 A2